# EUROPEAN PATENT APPLICATION

(11) **EP 4 552 947 A1**
(43) Date of publication of application: **14.05.2025**
(21) Application number: 23835328.8
(22) Date of filing: 22.06.2023
(51) Int. Cl.: B62D 1/185, B62D 1/20, B62D 5/04

(54) **STEERING SHAFT**

(30) Priority: 04.07.2022 JP 2022107503
(71) Applicant: NSK Steering & Control, Inc., Tokyo, 141-0032 (JP)
(72) Inventor: MAEDA, Koki, Maebashi-shi, Gunma 371-8527 (JP)
(74) Representative: Müller-Boré & Partner Patentanwälte PartG mbB
(86) International application number: PCT/JP2023/023222
(87) International publication number: WO 2024/009794

(57) **Abstract**

Structure of a steering shaft capable of suppressing changes in sliding resistance even when the entire length is changed is achieved. One engaging portion of an inner diameter side engaging portion 19 and an outer diameter side engaging portion 31 includes at least one non-engaging portion 23 that does not engage with the other engaging portion at an intermediate portion in an axial direction, engageable portions are arranged on both sides in the axial direction of the non-engaging portion 23 of the one engaging portion, and each of the engageable portions has an effective length X, the non-engaging portion 23 has a dimension in the axial direction that is the same length as the effective length X, and the other engaging portion has an effective length Y that is 2X, which is twice the effective length X.

## Description

### Technical Field

The present disclosure relates to a steering shaft.

### Background Art

In recent years, the implementation of autonomous driving technology in vehicles has progressed, and it is believed that in the near future, autonomous vehicles that have achieved SAE level 2 of driving automation (partial driving automation) will become widely used, and that autonomous vehicles that have achieved level 3 of driving automation (conditional driving automation) will also become more widespread.

At Leven 2 of driving automation, if certain conditions are met, the driver will be able to drive the vehicle with their hands off the steering wheel. In autonomous vehicles that implement autonomous driving technology of level 2 or higher, especially level 3 or higher, there is less need for the driver to operate the steering wheel. Therefore, in an autonomous vehicle, there is little need to keep the steering wheel within reach of the driver when autonomous driving is being performed, and it is desirable to move the steering wheel far forward in order to ensure a large room in front of the driver's seat.

In order to move the steering wheel far forward, it is necessary to make the extension/contraction stroke of a steering shaft to which the steering wheel is fixed longer than the extension/contraction stroke of steering shafts of conventional structures, thereby making the steering shaft have a long stroke.

The steering shaft includes an inner shaft and an outer shaft, and is configured by a male spline portion provided on the outer peripheral surface of the inner shaft and a female spline portion provided on the inner peripheral surface of the outer shaft that are engaged by spline engagement. In order for the steering shaft to make the stroke longer, it is conceivable to increase the entire length of the male spline portion and the female spline portion.

As a technology applicable to such a structure, JP2017-052514 A discloses covering the male spline teeth with a resin coating layer in order to reduce sliding resistance during extension/contraction of the steering shaft.

### Citation List

### Patent Literature

Patent Literature 1: JP2017-052514 A

### Summary of Invention

### Technical Problem

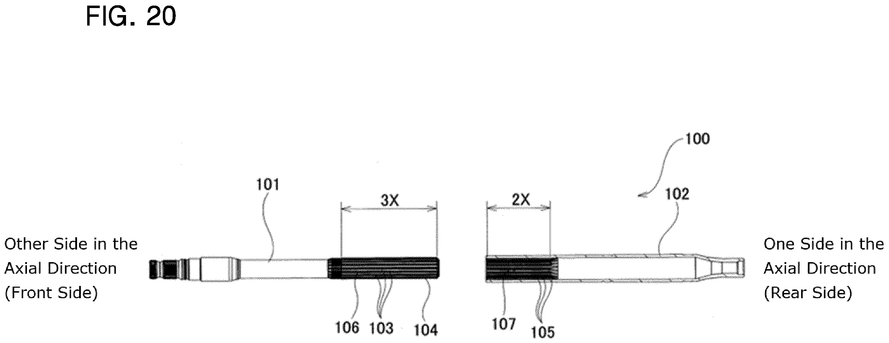

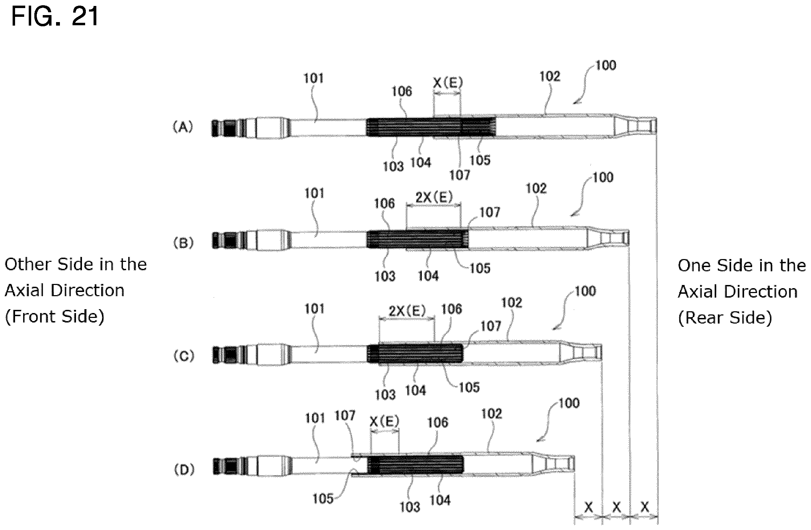

Fig. 20 and Fig. 21 illustrate an undisclosed steering shaft 100 that the inventors of the present disclosure had conceived prior to completing the present disclosure.

The steering shaft 100 includes an outer shaft 102 arranged on one side in the axial direction and an inner shaft 101 arranged on the other side in the axial direction. The inner shaft 101 has a male spline portion 106 that configures an inner diameter side engaging portion at an end portion on the one side in the axial direction of the outer peripheral surface thereof. The male spline portion 106 has a plurality of male spline teeth 103 that extend in the axial direction and arranged in the circumferetial direction.

The outer shaft 102 has a female spline portion 107 that configures an outer diameter side engaging portion at an end portion on the other side in the axial direction of the inner peripheral surface thereof. The female spline portion 107 engages with the male spline portion 106 so as to enable torque transmission and relative displacement in the axial direction. The female spline portion 107 has a plurality of female spline teeth 105 that extend in the axial direction and arranged in the circumferental direction.

The male spline portion 106 includes a resin coating layer 104 that covers a range from the end portion on the one side in the axial direction to an intermediate portion threof.

The effective length of the male spline portion 106 is defined as the dimension in the axial direction of a portion of the male spline portion 106 that can engage with the female spline portion 107 through the resin coating layer 104. When the engagement length E between the male spline portion 106 and the female spline portion 107 is X in a state where the entire length of the steering shaft 100 is most extended, the effective length of the male spline portion 106 is 3X. The dimension in the axial direction of the resin coating layer 104 is approximately the same as the effective length 3X of the male spline portion 106.

The value of "X" is set to a value of about 20mm in a steering shaft that is not intended to have a long stroke, but is set to a value of 30mm or more in a steering shaft that is intended to have a long stroke.

In the illustrated example, the effective length of the female spline portion 107 is 2X.

In the steering shaft 100 of the conventional structure, when the entire length is changed, the engagement length E between the male spline portion 106 and the female spline portion 107 changes as illustrated in Fig. 21(A) to Fig. 21(D).

Fig. 21(A) illustrates the steering shaft 100 with its entire length most extended. The engagement length E is X when the entire length of the steering shaft 100 is most extended.

Fig. 21(B) illustrates a state in which the entire length of the steering shaft 100 has been shortened by an amount of stroke equal to X from the state illustrated in Fig. 21(A). When the entire length of the steering shaft 100 is shortened from the state illustrated in Fig. 21(A) to the state illustrated in Fig. 21(B), the engagement length E gradually increases and becomes 2X eventually.

Fig. 21(C) illustrates a state in which the entire length of the steering shaft 100 has been shortened by an amount of stroke equal to X from the state illustrated in Fig. 21(B). When the entire length of the steering shaft 100 is shortened from the state illustrated in Fig. 21(B) to the state illustrated in Fig. 21(C), the engagement length E remains unchanged at 2X.

Fig. 21(D) illustrates a state where the entire length of the steering shaft 100 is most shortened by further shortening the entire length of the steering shaft 100 by an amount of stroke equal to X from the state illustrated in Fig. 21(C). When the entire length of the steering shaft 100 is shortened from the state illustrated in Fig. 21(C) to the state illustrated in Fig. 21(D), the engagement length E gradually decreases and becomes X eventually.

The engagement length E of the steering shaft 100 changes as the entire length changes. When the engagement length E changes, the frictional force at the engaging portion between the male spline portion 106 and the female spline portion 107 changes, so that the sliding resistance between the male spline portion 106 and the female spline portion 107, which depends on the frictional force, also changes in accordance with the change in the engagement length E.

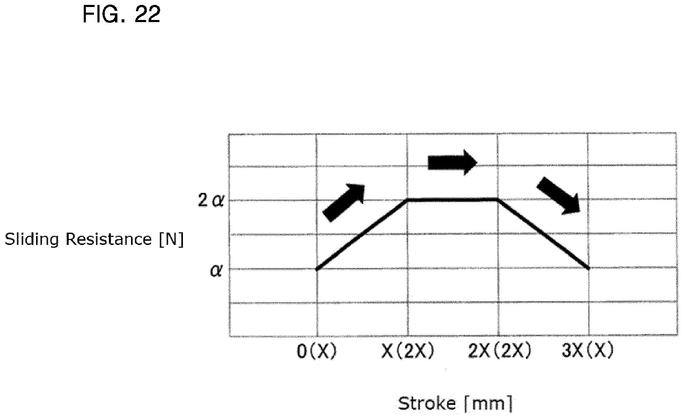

If the sliding resistance when the engagement length is X is taken as α, the relationship between the sliding resistance and the stroke amount is as illustrated in Fig. 22. That is, the sliding resistance of the steering shaft 100 changes when the engagement length E changes in accordance with an increase or decrease in the stroke amount, and remains constant when the engagement length E remains constant regardless of an increase or decrease in the stroke amount. The horizontal axis of Fig. 22 indicates the stroke amount from the state in which the entire length of the steering shaft 100 is most extended, and the vertical axis of Fig. 22 indicates the magnitude of the sliding resistance. The engagement length is indicated in parentheses next to the stroke amount.

If the sliding resistance changes in accordance with the change in the engagement length, in a manual steering device in which the driver manually adjusts the front-forward position of the steering wheel, the force required to adjust the front-forward position may vary, which may give the driver uneasiness or discomfort. In an electric steering device in which the front-forward position of the steering wheel is adjusted electrically, the driving noise of actuators such as electric motors may change, which may give the driver or passengers discomfort. When the steering shaft 100 is made to have a long stroke, the amount of change in the engagement length increases, so that the range of fluctuation in the sliding resistance also increases, and the aforementioned problems may become prominent.

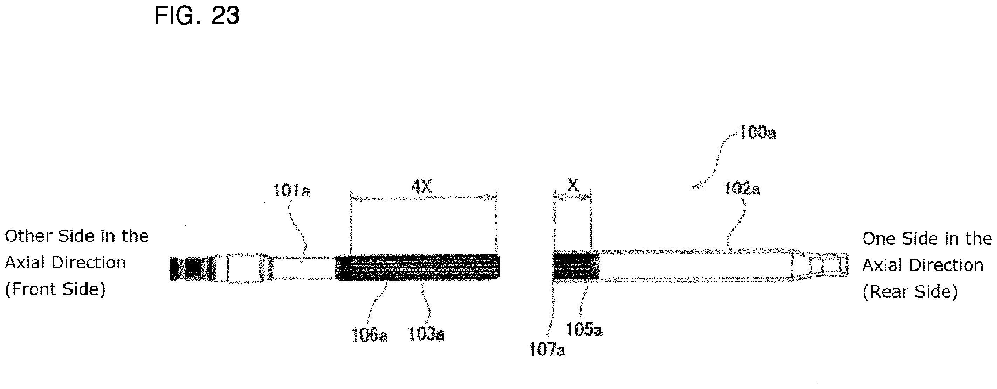

Fig. 23 illustrates another undisclosed steering shaft 100a that the inventors of the present disclosure had conceived prior to completing the present disclosure. In the steering shaft 100a, in order to ensure the same extension stroke amount as the steering shaft 100, the effective length of the male spline portion 106a of the inner shaft 101a is set to 4X, and the effective length of the female spline portion 107a of the outer shaft 102a is set to X.

With such a structure, even when the entire length of the steering shaft 100a is changed, the engagement length E does not change and can be kept constant at the same length as X, so that the sliding resistance can also be kept constant. However, since the dimension in the axial direction of the male spline portion 106a becomes excessively large, bending is likely to occur during manufacturing, and the productivity of the inner shaft 101a may deteriorate.

It is also possible to set the effective length of the female spline portion of the outer shaft to 4X and the effective length of the male spline portion of the inner shaft to X. In this case, however, the dimension in the axial direction of the female spline portion would be excessively large, which may result in problems such as reduced productivity of the outer shaft.

An object of the present disclosure is to provide a steering shaft that is capable of suppressing the sliding resistance from changing due to the change in the engagement length between the inner shaft and the outer shaft when the entire length of the steering shaft is changed, even in a structure especially in which the steering shaft has a long stroke.

### Solution to Problem

The steering shaft according to one aspect of the present disclosure includes :
an inner shaft having an inner diameter side engaging portion at an end portion on one side in the axial direction of an outer peripheral surface thereof, and
an outer shaft having an outer diameter side engaging portion at an end portion on the other side in the axial direction of an outer peripheral surface thereof, the outer diameter side engaging portion engaging with the inner diameter side engaging portion so as to enable torque transmission and relative displacement in the axial direction.

Either one engaging portion of the inner diameter side engaging portion or the outer diameter side engaging portion has at least one non-engaging portion at an intermediate portion in the axial direction that does not engage with the other engaging portion of the inner diameter side engaging portion or the outer diameter side engaging portion. Each of the engageable portions arranged on both sides in the axial direction of the non-engaging portion of the one engaging portion has an effective length X, and the non-engaging portion has a dimension in the axial direction that is the same length as the effective length X. In other words, the one engaging portion has a length in the axial direction (3X) that is three times the effective length X as a whole, and a dimension in the axial direction (2X) of the engageable portions that is twice the effective length X.

The other engaging portion of the inner diameter side engaging portion or the outer diameter side engaging portion has an effective length Y (=2X) twice as long as the effective length X.

The effective length X is defined by the dimension in the axial direction of a portion of each of the engageable portions of the one engaging portion that engages with the other engaging portion, and is equal to the engagement length between the one engaging portion and the other engaging portion when the entire length of the steering shaft is most extended.

The one engaging portion may include one of the non-engaging portion and two of the engageable portion. In this case, the engageable portion, the non-engaging portion, and the engageable portion are arranged in this order in the axal direction. Alternatively, the one engaging portion may include two of the non-engaging portion and three of the engageable portion. In this case, the engageable portion, the non-engaging portion, the engageable portion, the non-engaging portion, and the engageable portion are arranged in this order in the axial direction. Further, the one engaging portion may include three or more of the non-engaging portion and a number of the engageable portion that is one more than that of the non-engaging portion.

The inner diameter side engaging portion may be configured, for example, by an external teeth portion having a plurality of external teeth such as a male spline portion, a male serration portion, or the like, or by an engagement structure in which an outer peripheral surface there of has a non-circular cross-sectional contour shape. The outer diameter side engaging portion may be configured, for example, by an internal teeth portion having a plurality of internal teeth such as a female spline portion, a female serration portion, or the like, or by an engagement structure in which an inner peripheral surface thereof has a non-circular cross-sectional contour shape.

In the steering shaft according to one aspect of the present disclosure, the inner diameter side engaging portion may be configured by the one engaging portion, and the outer diameter side engaging portion may be configured by the other engaging portion. In this case, the engageable portions of the inner diameter side engaging portion may be configured by the external teeth portion, and the outer diameter side engaging portion may be configured by the internal teeth portion. Further, the effective length X is defined by a dimension in the axial direction of a portion of the plurality of external teeth of the external teeth portion that engage with the plurality of inner teeth.

In the steering shaft according to one aspect of the present disclosure, the non-engaging portion may be configured by a cylindrical surface having an outer diameter equal to or smaller than a root circle diameter of the plurality of external teeth.

In the steering shaft according to one aspect of the present disclosure, the inner shaft has a shaft body and the inner diameter side engaging portion on the outer peripheral surface thereof, and may be provided with a resin coating layer that covers the outer peripheral surface of an end portion on the one side in the axial direction of the shaft body. In this case, the inner diameter side engaging portion may have an anti-slip portion that prevents the resin coating layer from moving in the axial direction relative to the shaft body. The anti-slip portion may be configured by a recessed groove, a recessed portion, an elongated projection, a projection portion, or the like.

In the steering shaft according to one aspect of the present disclosure, the outer diameter side engaging portion may be configured by the one engaging portion, and the inner diameter side engaging portion may be configured by the other engaging portion. In this case, the engageable portion of the outer diameter side engaging portion may be configured by the internal teeth portion, and the inner diameter side engaging portion may be configured by the external teeth portion. Further, the effective length X is defined by a dimension in the axial direction of a portion of the plurality of inner teeth of the internal teeth portion that engage with the plurality of external teeth.

In the steering shaft according to one aspect of the present disclosure, the external teeth portion of the inner diameter side engaging portion is configured by a male spline portion. In this case, the plurality of external teeth is configured by male spline teeth. Further, the internal teeth portion of the outer diameter side engaging portion is configured by a female spline portion. In this case, the plurality of inner teeth is configured by female spline teeth.

In the steering shaft according to one aspect of the present disclosure, the external teeth portion of the inner diameter side engaging portion is configured by a male serration portion. In this case, the plurality of external teeth is configured by male serration teeth. Further, the internal teeth portion of the outer diameter side engaging portion is configured by a female serration portion. In this case, the plurality of inner teeth is configured by female serration teeth.

In the steering shaft according to one aspect of the present disclosure, the inner diameter side engaging portion is configured by a non-circular engagement structure in which the cross-sectional contour shape of the outer peripheral surface is a partial circle or a polygon, and the outer diameter side engaging portion is configured by a non-circular engagement structure in which the cross-sectional contour shape of the inner peripheral surface is a partial circle or a polygon.

In the steering shaft according to one aspect of the present disclosure, when the number of the non-engaging portion is one, the effective length X is 30mm or more, preferably 40mm or more.

### Advantageous Effect of Invention

With the steering shaft according to one aspect of the present disclosure, it is possible to suppress the sliding resistance from changing due to the change in the engagement length between the inner shaft and the outer shaft when the entire length of the steering shaft is changed, even in a structure especially in which the steering shaft has a long stroke.

### Brief Description of Drawings

[Fig. 1] Fig. 1 is a schematic view illustrating a steer-by-wire steering device including a steering shaft according to a first example of an embodiment of the present disclosure.
[Fig. 2] Fig. 2 is an end view of the steer-by-wire steering unit including the steering shaft of the first example as viewed from the rear side.
[Fig. 3] Fig. 3 is a perspective view illustrating the steer-by-wire steering unit including the steering shaft of the first example.
[Fig. 4] Fig. 4 is a cross-sectional view of the steering shaft of the first example.
[Fig. 5] Fig. 5 is an exploded cross-sectional view of the steering shaft of the first example.
[Fig. 6] Fig. 6 is a partially enlarged view of Fig. 4.
[Fig. 7] Fig. 7 is a partially enlarged schematic cross-sectional view of an inner shaft of the steering shaft of the first example.
[Fig. 8] Fig. 8(A) is a cross-sectional view of section A-A in Fig. 7, and Fig. 8(B) is a view corresponding to Fig. 8(A) illustrating a variation of the first example.

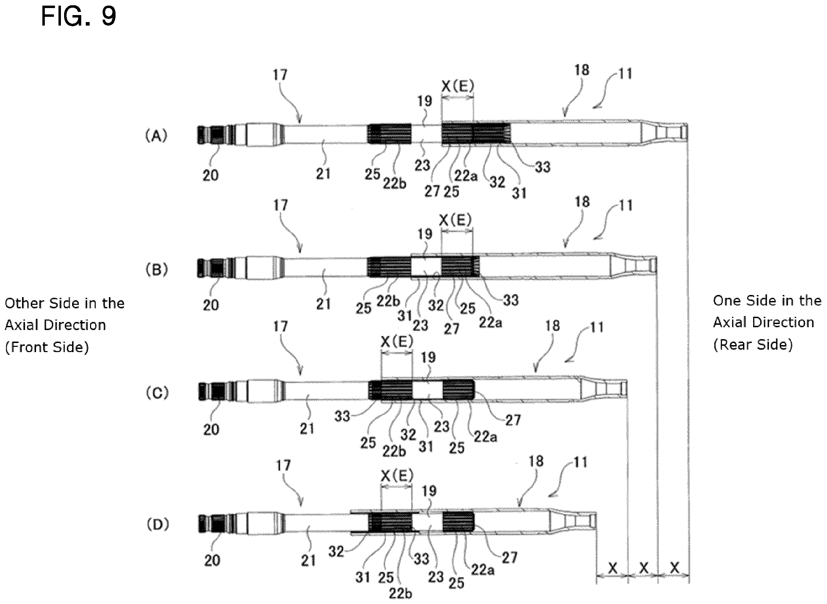

[Fig. 9] Fig. 9(A) is a cross-sectional view illustrating the steering shaft of the first example in a state where the entire length is most extended, Fig. 9(B) is a cross-sectional view illustrating the steering shaft in a state where the entire length is shortened by a stroke amount X from the state illustrated in Fig. 9(A), Fig. 9(C) is a cross-sectional view illustrating the steering shaft in a state where the entire length is shortened by a stroke amount X from the state illustrated in Fig. 9(B), and Fig. 9(D) is a cross-sectional view illustrating the steering shaft in a state where the entire length is most shortened.
[Fig. 10] Fig. 10 is a view schematically illustrating a relationship between the stroke amount and the magnitude of the sliding resistance with respect to the steering shaft of the first example.
[Fig. 11] Fig. 11 is a partially enlarged schematic cross-sectional view of an inner shaft of a steering shaft according to a second example of an embodiment of the present disclosure.
[Fig. 12] Fig. 12 is an enlarged view of a main portion of a variation of the second example.
[Fig. 13] Fig. 13 is a partially enlarged perspective view of an inner shaft of a steering shaft according to a third example of an embodiment of the present disclosure.
[Fig. 14] Fig. 14 is a perspective view illustrating a method for positioning the inner shaft in the circumferential direction when forming a resin coating layer on the inner shaft of the third example.
[Fig. 15] Fig. 15(A) is an end view of the inner shaft of the third example as viewed from one side in the axial direction, and Fig. 15(B) is an enlarged view of section B in Fig. 15(A) illustrating a state in which the resin coating layer has been formed.
[Fig. 16] Fig. 16 is a perspective view of a shaft body of an inner shaft of a steering shaft according to a fourth example of an embodiment of the present disclosure.
[Fig. 17] Fig. 17(A) to Fig. 17(D) are perspective views of a shaft body illustrating four variations of the fourth example.
[Fig. 18] Fig. 18 is a view corresponding to Fig. 6, illustrating a fifth example of an embodiment of the present disclosure.
[Fig. 19] Fig. 19 is a view corresponding to Fig. 6, illustrating a sixth example of an embodiment of the present disclosure.
[Fig. 20] Fig. 20 is an exploded cross-sectional view of a steering shaft of a prior invention.
[Fig. 21] Fig. 21(A) is a cross-sectional view illustrating the steering shaft of the prior invention in a state where the entire length is most extended, Fig. 21(B) is a cross-sectional view illustrating the steering shaft in a state where the entire length is shortened by a stroke amount X from the state illustrated in Fig. 21(A), Fig. 21(C) is a cross-sectional view illustrating the steering shaft in a state where the entire length is shortened by a stroke amount X from the state illustrated in Fig. 21(B), and Fig. 21(D) is a cross-sectional view illustrating the steering shaft in a state where the entire length is most shortened.
[Fig. 22] Fig. 22 is a view schematically illustrating a relationship between the stroke amount and the magnitude of the sliding resistance with respect to the steering shaft of the prior invention.
[Fig. 23] Fig. 23 is an exploded cross-sectional view illustrating a steering shaft according to another example of the prior invention.

### Description of Embodiments

### [First Example]

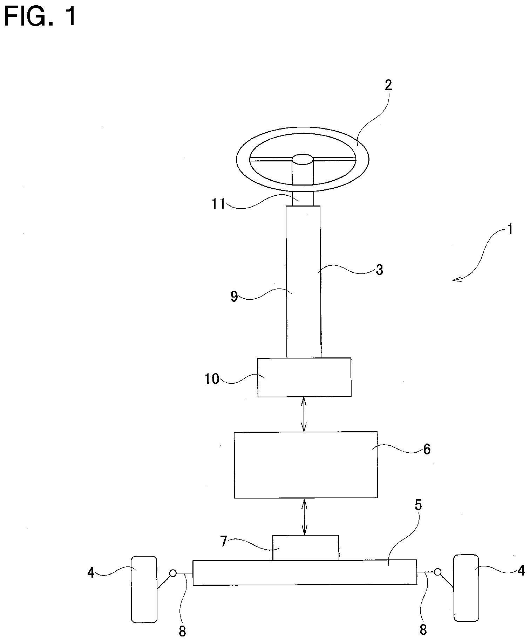

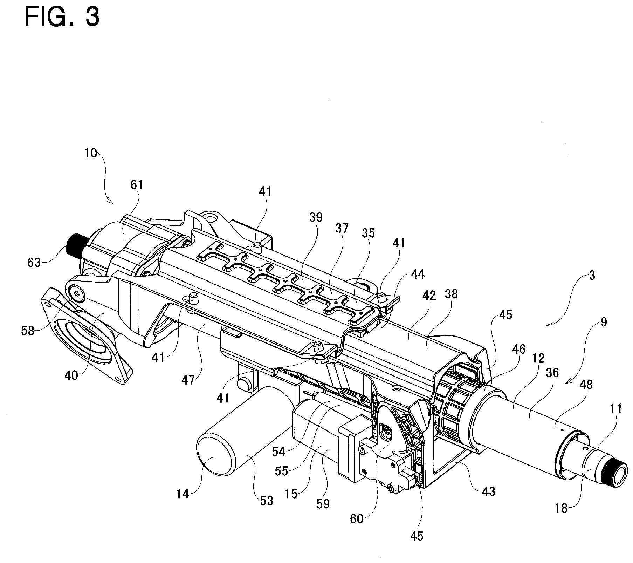

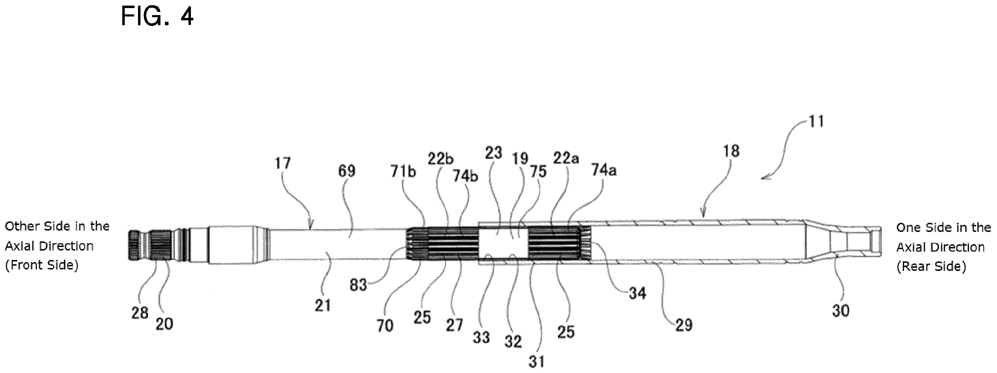

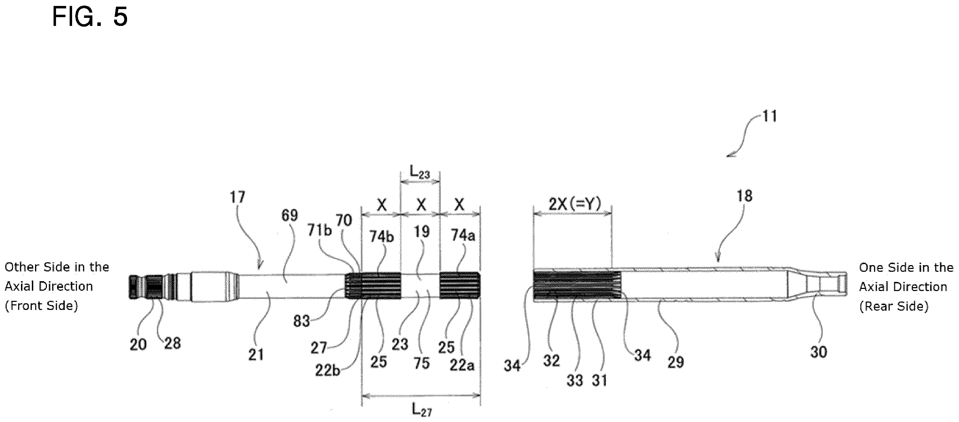

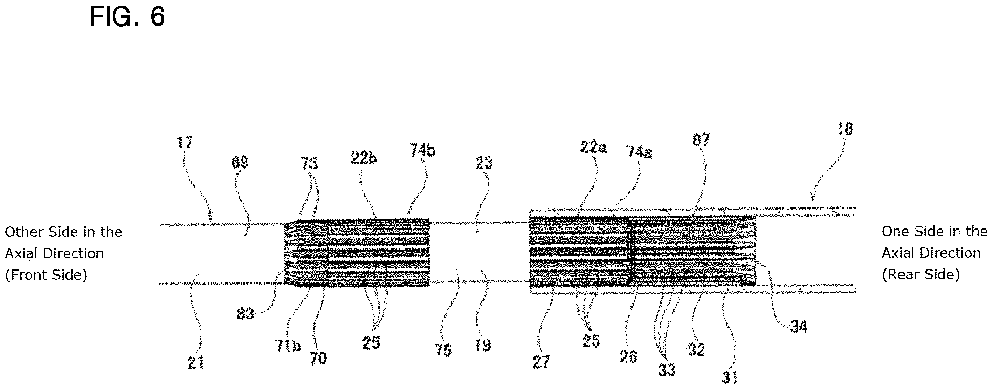

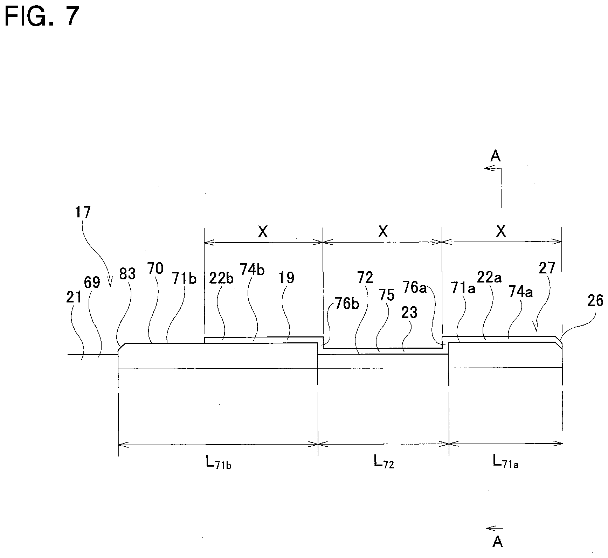

A first example of an embodiment of the present disclosure will be described using Fig. 1 to Fig. 10. In this example, the steering shaft of the present disclosure is applied to a steer-by-wire steering device for an autonomous vehicle. In the following description, the forward-backward direction means the forward-backward direction of the vehicle, and the up-down direction means the up-down direction of the vehicle, and the width direction means the width direction of the vehicle.

### [Overall Configuration of the Steering Device]

The steering device 1 of this example is a steer-by-wire steering device. The steering device 1, as illustrated in the overall configuration in Fig. 1, includes a steering unit 3 to which a steering wheel 2 is attached, a wheel turning unit 5 for turning a pair of steered wheels 4, and a control device (ECU) 6. The steering device 1 has a linkless structure in which the steering unit 3 and the wheel turning unit 5 are not mechanically connected but are electrically connected.

In the steering unit 3, the operation of the steering wheel 2 by the driver is measured by a torque sensor and/or a steering angle sensor (not illustrated), and the measurement results are output to the control device 6. The control device 6 receives various signals indicating driving conditions, such as the steering torque measured by the torque sensor, the steering angle measured by the steering angle sensor, the vehicle speed, the yaw rate, the acceleration, and the like. The control device 6 drives an actuator for wheel turning provided in the wheel turning unit 5 based on various signals indicating the driving conditions. As a result, a linear motion member such as a rack shaft and a screw shaft is displaced in the width direction, a pair of tie rods 8 are pushed or pulled, and a steering angle is applied to the pair of steered wheels 4.

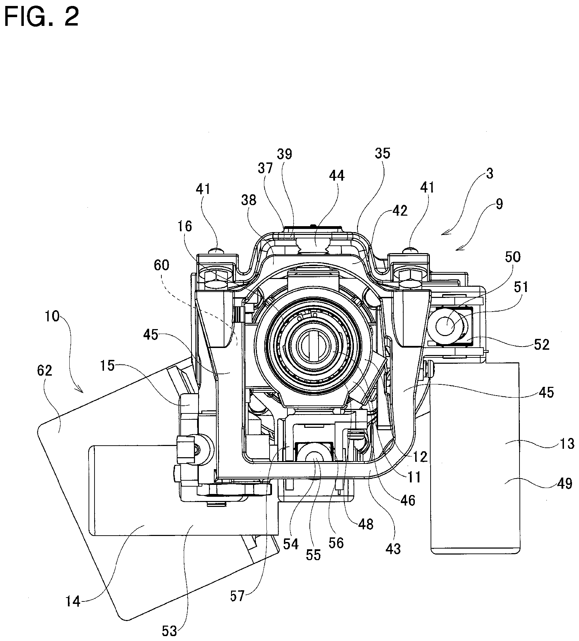

Based on the various signals indicating the driving conditions, the control device 6 controls the driving of a reaction force applying motor 62 (see Fig. 2) of a reaction force generating device 10 provided in the steering unit 3, and applies a steering reaction force to the steering wheel 2 according to driving conditions.

### [Steering Unit]

The steering unit 3 includes a position adjustment device 9 for adjusting the position of the steering wheel 2, and the reaction force generating device 10 for applying a steering reaction force to the steering wheel 2.

The position adjustment device 9 includes a telescopic mechanism for adjusting the front/rear position of the steering wheel 2, and a tilt mechanism for adjusting the up/down position of the steering wheel 2. Further, the position adjustment device 9 has a function of moving the steering wheel 2 significantly forward during automatic driving.

The position adjustment device 9 includes a steering shaft 11, a steering column 12, a lower side telescopic actuator 13, an upper side telescopic actuator 14, and a tilt actuator 15.

### <Steering Shaft>

The steering shaft 11 is configured so that the entire length may be extended or contracted, and is supported insde the steering column 12 by using a plurality of rolling bearings 16 so as to be able to rotate freely.

A steering wheel 2 is fixed to an end portion on the rear side of the steering shaft 11. An end portion on the front side of the steering shaft 11 is connected to an output shaft 63 of the reaction force generating device 10 through a torque transmission joint (not illustrated).

The steering shaft 11 includes an outer shaft 18 arranged on one side in the axial direction and an inner shaft 17 arranged on the other side in the axial direction. The inner shaft 17 has an inner diameter side engaging portion 19 at an end portion on the one side in the axial direction of the outer peripheral surface. The outer shaft 18 has an outer diameter side engaging portion 31 that engages with the inner diameter side engaging portion 19 so as to enable torque transmission and relative displacement in the axial direction.

In this example, the one side in the axial direction corresponds to the rear side, and the other side in the axial direction corresponds to the front side. However, in a case of implementing the present disclosure, the one side in the axial direction may be arragned to the front side, and the other side in the axial direction may be arragend to the rear side.

The steering shaft 11 is configured by combning the inner diameter side engaging portion 19 of the inner shaft 17 and the outer diameter side engaging portion 31 of the outer shaft 18 so that the entire length may be extended or contracted. Specifically, in order to move the steering wheel 2 significantly forward during automatic driving, the steering shaft 11 has a longer extension/contraction stroke amount compared to that of a steering shaft of a conventional structure that only allows adjustment of the front/rear position of the steering wheel 2.

### <<Inner Shaft>>

The inner shaft 17 is integrally configured as a whole from an iron-based alloy such as carbon steel, or a light alloy such as an aluminum alloy, a magnesium alloy, a titaniumm alloy, or the like. The inner shaft 17 is configured to be a solid or hollow cylindrical shape.

In this example, the inner diameter side engaging portion 19 of the inner shaft 17 corresponds to the one engaging portion. The inner diameter side engaging portion 19 includes a non-engaging portion 23 in the intermediate portion in the axial direction that does not engage with the outer diameter side engaging portion 31 of the outer shaft 18 which corresponds to the other engaging portion. First engaging portions 22a, 22b, which correspond to the two engageable portions, are arranged on both sides in the axial direction of the non-engaging portion 23. Each of the first engaging portions 22a, 22b has an effective length X. The non-engaging portion 23 has a dimension in the axial direction that is the same as the effective length X.

In other words, the inner diameter side engaging portion 19 cinludes one non-engaging portion 23 and two first engaging portions 22a, 22b. In the inner diameter side engaging portion 19, the first engaging portion 22a, the non-engaging portion 23, and the first engaging portion 22b, are arranged in this order in the axial direction.

In a case of implementing the present disclosure, the inner diameter side engaging portion may include two of the non-engaging portion and three of the first engaging portion. In this case, the first engaging portion, the non-engaging portion, the first engaging portion, the non-engaging portion, and the first engaging portion are arranged in this order. Further, the one engaging portion may include three or more of non-engaging portion and a number of the first engaging portion that is one more than the number of the non-engaging portion.

The inner diameter side engaging portion 19 may be configured by, for example, an external teeth portion such as a male spline portion, a male serration portion, or the like comprising a plurality of external teeth, or by an engaging portion in which the outer peripheral surface has a non-circular cross-sectional contour shape.

Each of the first engaging portions 22a, 22b configuring the inner diameter side engaging portion 19 is configured by an external teeth portion 86 having a plurality of external teeth 25 arranged in the circumferential direction. The plurality of external teeth 25 extend in the axial direction and arranged in the circumferential direction. In this example, the plurality of external teeth 25 are arranged at equal pitches in the circumferential direction. The thooth thickness and tooth height of each of the plurality of external teeth 25 are constant over the axial direction.

Of the first engaging portions 22a, 22b, the first engaging portion 22a arranged on the one side in the axial direction and the first engaging portion 22b arranged on the other side in the axial direction have the same number, pitch, tooth thickness, tooth height, and arrangement phase of the plurality of external teeth 25.

In this example, the external teeth portion 86 of the first engaging portions 22a, 22b of the inner diameter side engaging portion 19 is configured by a male spline portion. Each of the plurality of external teeth 25 is configured by a male spline tooth.

The first engaging portion 22a on the one side in the axial direction has a chamfered portion 26 at an end portion on the one side in the axial direction.

The non-engaging portion 23 is arranged between the first engaging portions 22a, 22b in the axial direction. The non-engaging portion 23 is configured by a cylindrical surface whose outer diameter does not change in the axial direction. The non-engaging portion 23 has an outer diameter that is smaller than the root circle diameter of the plurality of external teeth 25 of the first engaging portions 22a, 22b.

In a case of implementing the present disclosure, the outer peripheral surface shape of the non-engaging portion is not limited to a cylindrical surface, and other shapes can be adopted as long as they do not interfere with the outer diameter side engaging portion prvided on the outer shaft. More specifically, the non-engaging portion may have a shape that is capable displacing in the axial direction relative to the outer diameter side engaging portion and that does not engage with the outer diameter side engaging portion to enable torque transmission. For example, the non-engaging portion may also be configured by arranging a plurality of teeth having a lower tooth height and/or smaller tooth width than the plurality of external teeth 25 in the circumferential direction.

The inner diameter side engaging portion 19 of this example does not have continuous external teeth over the entire length in the axial direction of the inner diameter side engaging portion 19, but has external teeth portions 86 configured by external teeth 25 only on both side portions in the axial direction of the inner diameter side engaging portion 19 excluding the non-engaging portion 23.

The first engaging portions 22a, 22b have the same effective length X. The effective length X is defined by the dimension in the axial direction of a portion of each of the first engaging portions 22a, 22b of the inner diameter side engaging portion 19 that engages with the outer diameter side engaging portion 31, and is equal to the engagement length between the inner diameter side engaging portion 19 and the outer diameter side engaging portion 31 in a state where the entire length of the steering shaft 11 is most extended.

Of each of the first engaging portions 22a, 22b, the portion that engages with the outer diameter side engaging portion 31 is a portion that can contribute to torque transmission when the torque is transmitted between the inner shaft 17 and the outer shaft 18.

In this example, the entire length in the axial direction of the first engaging portion 22a, including the chamfered portion 26 provided at the end portion on the one side in the axial direction, is the effective length X. However, when the chamfered portion 26 does not contribute to torque transmission, the dimension in the axial direction of the range in the axial direction of the first engaging portion 22a excluding the chamfered portion 26 is defined as the effective length X.

The non-engaging portion 23 has a dimension in the axial direction L₂₃ that is the same as the effective length X of each of the first engaging portions 22a, 22b (L₂₃=X).

In order to achieve a longer stroke of the steering shaft 11, the reference dimension "X" is set to a value of 30mm or more. In this example, the "X" is about 50mm.

In this example, the inner diameter side engaging portion 19 includes a resin coating layer 27. More specifically, the inner shaft 17 is confgured by a shaft body 69 and the resin coating layer 27. The shaft body 69 has an inner diameter side engaging core portion 70 provided on the outer peripheral surface of an end portion on the one side in the axial direction, a connecting portion 20 arranged at an end portion on the other side in the axial direction, and an intermediate shaft portion 21 arranged at an intermediate portion in the axial direction. The inner diameter side engaging core portion 70 of the shaft body 69 is covered by the resin coating layer 27 over its entire length in the axial direction and over its entire circumference. The inner diameter side engaging portion 19 is configured by the inner diameter side engaging core portion 70 and the resin coating layer 27.

The inner diameter side engaging core portion 70 includes a non-engagement core portion 72 and first engaging core portions 71a, 71b that are arranged on both sides in the axial direction thereof. Each of the first engaging core portions 71a, 71b is configured by an external tooth core portion 88 in which a plurality of tooth cores 73 are arranged in the circumferential direction. The plurality of tooth cores 73 extend in the axial direction and are arranged at equal pitches in the circumferential direction. The thooth thickness and tooth height of each of the plurality of tooth cores 73 are constant over the axial direction, except for a chamfered portion 83 provided at an end portion on the distal side with respect to the non-engagement core portion 72.

Of the first engaging core portions 71a, 71b, the first engaging core portion 71a arranged on the one side in the axial direction and the first engaging core portion 71b arranged on the other side in the axial direction have the same number, pitch, tooth thickness, tooth height, and arrangement phase of the plurality of tooth cores 73.

In this example, the dimension in the axial direction L_{71b} of the first engaging core portion 71b on the other side in the axial direction is larger than the dimension in the axial direction L₇₁ₐ of the first engaging core portion 71a on the one side in the axial direction (L_{71b}>L₇₁ₐ), and is also larger than the effective length X (L₇₁ₐ>X).

The non-engagement core portion 72 is arranged between the first engaging core portions 71a, 71b in the axial direction. The non-engagement core portion 72 is configured by a cylindrical surface whose outer diameter does not change in the axial direction. The non-engagement core portion 72 has an outer diameter smaller than the root circle diameter of the tooth cores 73 of the first engaging core portions 71a, 71b.

The outer peripheral surface of the connecting portion 20 has an uneven shape in the circumferential direction. More specifically, a plurality of male serration teeth 28 extending in the axial direction are arranged in the circumferential direction on the outer peripheral surface of the connecting portion 20.

A torque transmission joint (not illustrated) is fixed to the connecting portion 20 so as not be able to relatively rotate. As a result, the end portion on the other side in the axial direction of the inner shaft 17 is connected to the output shaft 63 of the reaction force generating device 10 through the torque transmission joint.

The intermediate shaft portion 21 is provided in an intermediate portion between the inner diameter side engaging portion 19 and the connecting portion 20 in the axial direction. Similar to the non-engagement core portion 72, the intermediate shaft portion 21 has an outer peripheral surface having a cylindrical surface shape, and has the same cross-sectional shape, outer diameter, and surface properties as those of the non-engagement core portion 72.

The manufacturing method of the shaft body 69 is not particularly limited, and the shaft body 69 may be manifactured by only forging or only cutting, or may be manufactured by appropriately combining forging and cutting. The non-engagement core portion 72 of the inner diameter side engaging core portion 70 does not need to have good surface properties, threfore, excess material can be left on the non-engagement core portion 72 when manufacturing the shaft body 69 by forging.

The resin coating layer 27 of the inner diameter side engaging portion 19 serves to reduce the sliding resistance of the inner diameter side engaging portion 19 when the steering shaft 11 is extended or contracted. More specifically, the entire length in the axial direction of the first engaging core portion 71a on the one side in the axial direction and the entire length in the axial direction of the non-engagement core portion 72 are respectively covered with the resin coating layer 27, and the range from the end portion on the one side in the axial direction to the intermediate portion in the axial direction of the first engaging core portion 71b on the other side in the axial direction is covered with a resin coating layer 27. The end portion on the other side in the axial direction of the first engaging core portion 71b on the othr side in the axial direction is not covered with the resin coating layer 27 and is exposed.

The resin coating layer 27 has two first engaging core portion cover portions 74a, 74b that cover the first engaging core portions 71a, 71b, and a non-engagement core portion cover portion 75 that covers the non-engagement core portion 72, and two side plate portions 76a, 76b, each of which has a substantially annular shape.

Of the first engaging core portion cover portions 74a, 74b, the first engaging core portion cover portion 74a on the one side in the axial direction covers the first engaging core portion 71a on the one side in the axial direction over the entire length in the axial direction, and the first engaging core portion cover portion 74b on the other side in the axial direction covers the range from the end portion on the one side in the axial direction to the intermediate portion in the axial direction of the first engaging core portion 71b on the other side in the axial direction. The outer peripheral surfaces of the first engaging core portion cover portions 74a, 74b are configured by uneven surfaces in which recessed portions and projection portions are alternately arranged in the circumferential direction.

The outer peripheral surface of the non-engagement core portion cover portion 75 is configured by a cylindrical surface whose outer diameter does not change in the axial direction. The outer diameter of the non-engagement core portion cover portion 75 is smaller than the outer diameter of the bottom surface of the recessed portions of the outer peripheral surfaces of the first engaging core portion cover portions 74a, 74b.

The side plate portions 76a, 76b connect end portions on both sides in the axial direction of the non-engagement core portion cover portion 75 and proximal end portions of the first engaging core portion cover portions 74a, 74b relative to the non-engagement core portion cover portion 75, respectively. The outer peripheral surfaces of the side plate portions 76a, 76b are configured by uneven surfaces in which recessed portions and projection portions are alternately arranged in the circumferential direction.

The end surface on the one side in the axial direction of the non-engagement core portion cover portion 75 and the side surface on the one side in the axial direction of the side plate portion 76a on the one side in the axial direction abut against the end surfaces on the other side in the axial direction of the plurality of tooth cores 73 of the first engaging core portion 71a on the one side in the axial direction, and the end surface on the other side in the axial direction of the non-engagement core portion cover portion 75 and the side surface on the other side in the axial direction of the side plate portion 76b on the other side in the axial direction abut against the end surfaces on the one side in the axial direction of the plurality of tooth cores 73 of the first engaging core portion 71b on the other side in the axial direction. As a result, even when the resin coating layer 27 is formed by a method that does not use an adhesive to adhere the synthetic resin that configures the resin coating layer 27 to a metal material that configures the shaft body 69, such as injection molding, it is possible to prevent the resin coating layer 27 from displacing in the axial direction relative to the shaft body 69.

However, in order to improve the bonding strength between the shaft body 69 and the resin coating layer 27,it is also possible to provide minute uneven portions on a part or all over the inner diameter side engaging core portion 70 of the shaft body 69 by shot blasting or to apply an adhesive thereto.

The dimension in the axial direction L₂₇ of the resin coating layer 27 is approximately equal to three times the effective length X of each of the first engaging portions 22a, 22b (L₂₇≈3X). In this example, the dimension in the axial direction L₂₇ of the resin coating layer 27 is approximately 150mm.

In this example, more specifically, the effective length X is the dimension in the axial direction of the plurality of external teeth 25 that mesh with the plurality of inner teeth 33 when transmitting torque between the inner shaft 17 and the outer shaft 18. In transmitting torque between the inner shaft 17 and the outer shaft 18, tooth surfaces (side surfaces in the circumferential direction) of portions of the plurality of external teeth 25 that mesh with the plurality of inner teeth 33 come in sliding contact with the tooth surfaces of the plurality of inner teeth 33 when the inner shaft 17 displaces in the axial direction relative to the outer shaft 18. The dimension in the axial direction L₇₁ₐ of the first engaging core portion 71a and the dimension in the axial direction L₇₂ of the non-engagement core portion 72 are regulated so that the dimension in the axial direction of the first engaging portion 22a on the one side in the axial direction and the dimension in the axial direction of the non-engaging portion 23 become the effective length X.

The dimension in the axial direction L₇₁ₐ of the first engaging core portion 71a on the one side in the axial direction is a dimension obtained by subtracting the dimension in the axial direction of the side plate portion 76a on the one side in the axial direction of the resin coating layer 27 from the effective length X. Further, the dimension in the axial direction L₇₂ of the non-engagement core portion 72 is the sum of the effective length X and the thickness in the axial direction of the side plate portions 76a, 76b.

The resin coating layer 27 is configured by a synthetic resin having a low coefficient of friction with respect to the metal material of the outer shaft 18, such as polyamide resin (PA), polyethylene tetrafluoroethylene resin (PTFE), or polyacetal resin (POM).

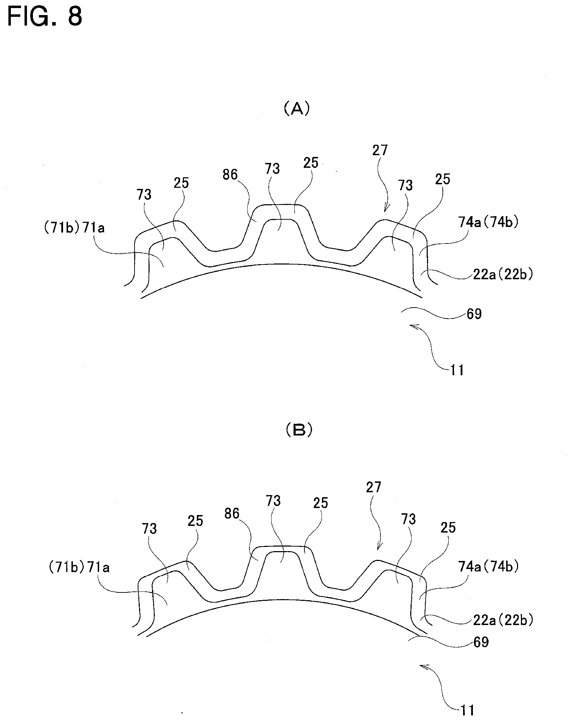

As illustrated in Fig. 8(A), the thickness of the resin coating layer 27 is almost constant over the entire circumference and is sufficiently smaller than the tooth width and tooth height of the tooth cores 73. More specifically, the thickness of the resin coating layer 27 is about 10 µm to 1000 µm. The resin coating layer 27 has a contour shape that follows the outer shapes of the first engaging core portions 71a, 71b and the non-engagement core portion 72. Such a resin coating layer 27 can be formed, for example, by injection molding using a molding die.

In a case of implementing the present disclosure, the thickness of the resin coating layer 27 may be varied in the circumferential direction. For example, as illustrated in Fig. 8(B), of the resin coating layer 27, the thickness of the portions covering the tooth tip surfaces of the tooth cores 73 may be smaller than the thickness of the portions covering the tooth bottom surfaces between two tooth cores 73 that are adjacent in the circumferential direction. Such a resin coating layer 27 may be formed by using a fluidized bed method.

The non-engagement core portion cover portion 75 of the resin coating layer 27 may be formed, for example, by molding a synthetic resin around the shaft body 69 and then performing a cutting pocess on the outer peripheral surface. Alternatively, in a case where the amount of thermal shrinkage of the synthetic resin molded around the non-engagement core portion 72 is sufficiently greater than the amount of thermal shrinkage of the synthetic resin molded around the first engaging core portions 71a, 71b, the cutting process may be omitted.

In other words, the amount of thermal shrinkage of the synthetic resin increases as the thickness increases. Therefore, even in a case where the synthetic resin formed around the non-engagement core portion 72 is molded until its outer dimater becomes the same as the outer diameter of the synthetic resin formed around the first engaging core portions 71a, 71b, the amount of thermal shrinkage of the synthetic resin molded around the non-engagement core portion 72 will be greater than the amount of thermal shrinkage of the synthetic resin molded around the first engaging core portions 71a, 71b.

### <<Outer Shaft>>

The outer shaft 18 has a hollow cylindrical shape. The outer shaft 18 is arranged on the one side in the axial direction of the inner shaft 17. The outer shaft 18 has a large diameter cylindrical portion 29 in a range from an end portion on the other side in the axial direction to an intermediate portion in the axial direction, and has a small diameter cylindrical portion 30 at an end portion on the one side in the axial direction. The outer shaft 18 has an outer diameter side engaging portion 31 at an end portion on the other side in the axial direction of the inner peripheral surface of the large diameter cylindrical portion 29. The steering wheel 2 is fixed to the end portion on the one side in the axial direction of the outer shaft 18. In this example, the outer diameter side engaging portion 31 corresponds to the other engaging portion.

The outer diameter side engaging portion 31 has a second engaging portion 32 over the entire length in the axial direction. That is, the outer diameter side engaging portion 31 is configured only by the second engaging portion 32. The second engaging portion 32 is configured by an internal teeth portion 87 having a plurality of inner teeth 33 arranged in the circumferential direction. The plurality of inner teeth 33 extend in the axial direction and are arranged in the circumferential direction. In this example, the plurality of inner teeth 33 are arranged at equal pitches in the circumferential direction.

The tooth thickness and tooth height of each of the plurality of inner teeth 33 is constant over the axial direction except for a chamfered portion 34 provided at an end portion in the axial direction. The inner teeth 33 have an addendum circle diameter that is larger than the outer diameter of the non-engaging portion 23 of the inner shaft 17.

In this example, the second engaging portion of the outer diameter side engaging portion 31 is configured by female spline portions. The plurality of inner teeth 33 are configured by female spline teeth.

The second engaging portion 32 engages with the first engaging portions 22a, 22b of the inner diameter side engaging portion 19 provided on the inner shaft 17 so as to enable torque transmission and relative displacement in the axial direction. More specifically, the plurality of inner teeth 33 of the second engaging portion 32 mesh with the plurality of external teeth 25 of the first engaging portions 22a, 22b. As a result, the outer shaft 18, together with the steering wheel 2, moves relative to the inner shaft 17 in the forward-backward direction, causing the steering shaft 11 to be extended or contracted.

The second engaging portion 32 does not engage with the non-engaging portion 23 of the inner diameter side engaging portion 19 provided on the inner shaft 17. More specifically, the tooth tip surfaces of the plurality of inner teeth 33 face the outer peripheral surface of the non-engaging portion 23 through a gap.

In this example, the effective length Y of the second engaging portion 32, which is the dimension in the axial direction of a portion of the plurality of inner teeth 33 that is deviated from the chamfered portion 34, is twice the effective length X of the first engaging portions 22a, 22b of the inner diameter side engaging portion 19. In this example, the value of "Y" is about 100mm.

However, when the chamfered portion 34 contributes torque transmission, the effective length Y is the entire length in the axial direction of the plurality of inner teeth 33 including the chamfered portion 34.

In the steering shaft 11 of this example, when the entire length is changed, the spline engagement state between the inner diameter side engaging portion 19 and the outer diameter side engaging portion 31 switches as illustrated in Fig. 9(A) to Fig. 9(D).

Fig. 9(A) illustrates a state in which the entire length of the steering shaft 11 is most extended. In this state, the plurality of external teeth 25 of the first engaging portion 22a on the one side in the axial direction mesh with the plurality of inner teeth 33 that configures a half portion on the other side in the axial direction of the second engaging portion 32. The engagement length E between the plurality of external teeth 25 and the plurality of inner teeth 33 in this state is the same as the effective length X of the first engaging portion 22a.

Fig. 9(B) illustrates a state in which the entire length of the steering shaft 11 is shortened by a stroke amount equal to X from the state illustrated in Fig. 9(A). When the entire length of the steering shaft 11 is shortened from the state illustrated in Fig. 9(A) to the state illustrated in Fig. 9(B), the plurality of external teeth 25 of the first engaging portion 22a on the one side in the axial direction move to the one side in the axial direction while remaining meshed with the plurality of inner teeth 33 of the second engaging portion 32. Further, the non-engaging portion 23 is inserted into the inside in the radial direction of the end portion on the other side in the axial direction of the outer shaft 18. In this case, the engagement length E remains at X and does not change.

Fig. 9(C) illustrates a state in which the entire length of the steering shaft 11 is further shortened by a stroke amount equal to X from the state illustrated in Fig. 9(B). When the entire length of the steering shaft 11 is shortened from the state illustrated in Fig. 9(B) to the state illustrated in Fig. 9(C), at the same time that the plurality of external teeth 25 of the first engaging portion 22a on the one side in the axial direction move out from the plurality of inner teeth 33 of the second engaging portion 32 to the one side in the axial direction, the plurality of external teeth 25 of the first engaging portion 22b on the other side in the axial direction begin to mesh with the plurality of inner teeth 33 of the second engaging portion 32.

In this state, the plurality of external teeth 25 of the first engaging portion 22a on the one side in the axial direction and the external teeth 25 of the first engaging portion 22b on the other side in the axial direction are simultaneously spline-engaged with the plurality of inner teeth 33. The sum of the engagement length between the plurality of external teeth 25 of the first engaging portion 22a on the one side in the axial direction and the plurality of inner teeth 33 and the engagement length between the plurality of external teeth 25 of the first engaging portion 22b on the other side in the axial direction and the plurality of inner teeth 33 is X. Therefore, even while the entire length of the steering shaft 11 is being shortened from the state illustrated in Fig. 9(B) to the state illustrated in Fig. 9(C), the engagement length E remains at X and does not change.

Fig. 9(D) illustrates a state in which the entire length of the steering shaft 11 is further shortened by a stroke amount equal to X from the state illustrated in Fig. 9(C), thereby making the entire length of the steering shaft 11 the shortest. When the entire length of the steering shaft 11 is shortened from the state illustrated in Fig. 9(C) to the state illustrated in Fig. 9(D), the plurality of external teeth 25 of the first engaging portion 22b on the other side in the axial direction move to the one side in the axial direction while remaining meshed with the plurality of inner teeth 33 of the second engaging portion 32. Due to this, even when the entire length of the steering shaft 11 is shortened from the state illustrated in Fig. 9(C) to the state illustrated in Fig. 9(D), the engagement length E remains at X and does not change.

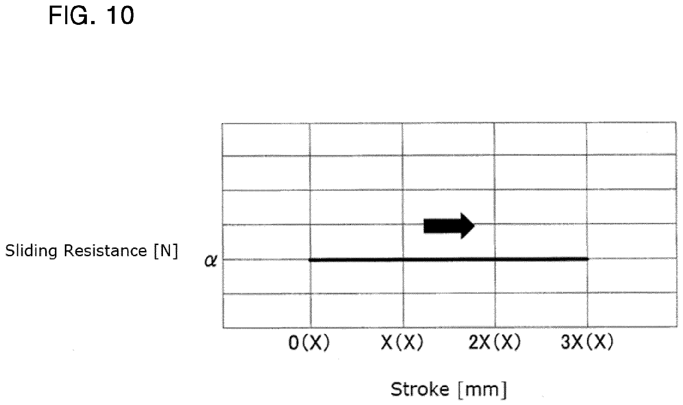

Even when the entire length of the steering shaft 11 is changed, the engagement length E between the plurality of external teeth 25 and the plurality of inner teeth 33 can be made constant without changing. Due to this, even in a case where the sliding resistance when the engagement length is X is taken as α, the relationship between the sliding resistance and the stroke amount is as illustrated in Fig. 10.

In other words, in the steering shaft 11, since the engagement length E remains constant regardless of an increase or decrease in the stroke amount, the sliding resistance remains constant. The horizontal axis of Fig. 10 indicates the stroke amount from the state in which the entire length of the steering shaft 11 is most extended, and the vertical axis of the Fig. 10 indicates the magnitude of the sliding resistance. The engagement length E is indicated in parentheses next to the stroke amount.

### <<Steering Column>>

The steering column 12 is configured so that the entire length may be extended or contracted, and is supported by a vehicle body (not illustrated). The steering column 12 includes a bracket 35 and a column body 36. The steering column 12 of this example has a two-stage telescopic structure in order to ensure a large extension stroke amount in the forward-backward direction.

The bracket 35 is for supporting the column body 36 on the vehicle body, and includes a fixed bracket 37 that is fixed to the vehicle body and a displacement bracket 38 that is supported so as to be able to displace in the forward-backward direction relative to the fixed bracket 37.

The fixed bracket 37 includes a substantially rectangular flat plate-shped fixing plate portion 39 and a substantially U-shaped fixing side support frame 40. The fixing plate portion 39 is fixed to the vehicle body by using a plurality of mounting bolts 41. The fixing side support frame 40 is provided at an end portion on the front side of the fixing plate portion 39, and connects end portions on both sides in the width direction of the fixing plate portion 39.

The displacement bracket 38 includes a displacement plate portion 42 arranged so as to be superimposed on the lower surface of the fixing plate portion 39, and a substantially U-shaped displacement side support frame 43. The displacement plate portion 42 is supported by a linear guide 44 so as to be able to displace in the forward-backward direction relative to the fixing plate portion 39.

The displacement side support frame 43 is provided at an end portion on the rear side of the displacement plate portion 42, and connects end portions on both sides in the width direction of the displacement plate portion 42. Of the pair of left and right support walls 45 of the displacement side support frame 43, a screw shaft (not illustrated) of a tilt feed screw device 60 of the tilt actuator 15 is supported on the inner side surface of one of the pair of left and right support walls 45 so as to be able to rotate freely, with its axial direction oriented in the up-down direction.

The column body 36 is configured to be substantially cylindrical as a whole, and is arranged with its axial direction oriented in the forward-backward direction. The column body 36 includes an outer column 46 arranged in the intermediate portion in the forward-backward direction, a lower side inner column 47 that is fitted inside a front side portion of the outer column 46, and an upper side inner column 48 that is fitted inside a rear side portion of the outer column 46.

The outer column 46 is supported so as to be able to move in the up-down direction with respect to the displacement bracket 38. The rear side portion of the outer column 46 is inserted inside the displacement side support frame 43 of the displacement bracket 38 in the forward-backward direction. A nut (not illustrated) of the tilt feed screw device 60 of the tilt actuator 15 is pivotally supported on the outer peripheral surface of the rear side portion of the outer column 46. The outer column 46 has a slit (not illustrated) extending in the forward-backward direction in an intermediate portion in the forward-backward direction of a lower surface thereof.

The lower side inner column 47 is fitted inside the front side portion of the outer column 46 so as to be able to relatively displace in the forward-backward direction. An end portion on the front side of the lower side inner column 47 is supported and fixed to the fixed bracket 37 through a gear housing 61. Further, the inner shaft 17 is supported inside the lower side inner column 47 so as to be able to rotate freely through the rolling bearings 16.

The upper side inner column 48 is fitted insie the rear side portion of the outer column 46 so as to be able to relatively displace in the forward-backward direction. The outer shaft 18 is supported inside the upper side inner column 48 so as to be able to rotate freely through rolling bearings 16.

### <Lower Side Telescopic Actuator>

The lower side telescopic actuator 13 is arranged so as to bridge between the fixed bracket 37 and the displacement bracket 38, and displaces the displacement bracket 38 in the forward-backward direction relative to the fixed bracket 37. As a result, the outer column 46 and the lower side inner column 47 are relatively displaced in the forward-backward direction, causing the column body 36 to be extended and contracted.

The lower side telescopic actuator 13 includes a lower side telescopic motor 49 and a lower side feed screw device 50.

The lower side telescopic motor 49 is supported and fixed to a side surface in the width direction of the fixing side support frame 40 of the fixed bracket 37 with its motor output shaft (not illustrated) oriented in the up-down direction.

As illustrated in Fig. 2, the lower side feed screw device 50 includes a lower side screw shaft 51 and a lower side nut 52. The lower side screw shaft 51 is arranged with its axial direction oriented in the forward-backward direction, and is rotationally driven by the lower side telescopic motor 49 through a speed-reducing mechanism such as a worm reducer (not illustrated). The lower side screw shaft 51 is supported so as to be able to only rotate with respect to the fixed bracket 37. The lower side nut 52 is screwed onto the lower side screw shaft 51, and is supported by a side surface in the width direction of the displacement bracket 38.

In other words, the lower side telescopic actuator 13 rotationally drives the lower side telescopic motor 49 to displace the lower side nut 52 in the axial direction of the lower side screw shaft 51, thereby causing the outer column 46 displace in the forward-backward direction relative to the lower side inner column 47.

### <Upper Side Telescopic Actuator>

The upper side telescopic actuator 14 is arranged so as to bridge between the outer column 46 and the upper side inner column 48, and displaces the upper side inner column 48 in the forward-backward direction relative to the outer column 46. As a result, the column body 36 is extended and contracted.

The upper side telescopic actuator 14 includes an upper side telescopic motor 53 and an upper side feed screw device 54.

The upper side telescopic motor 53 is supported below an end portion on the front side of the outer column 46 with its motor output shaft (not illustrated) oriented in the width direction.

The upper side feed screw device 54 includes an upper side screw shaft 55 and an upper side nut 56. The upper side screw shaft 55 is arranged with its axial direction oriented in the forward-backward direction, and is rotationally driven by the upper side telescopic motor 53 through a speed-reducing mechanism such as a worm reducer (not illustrated). The upper side screw shaft 55 is supported so as to be able to only rotate with respect to the outer column 46. The upper side nut 56 is screwed onto the upper side screw shaft 55, and is supported on the lower surface of the upper side inner column 48 through a connector member 57.

The connector member 57 is arranged inside a slit provided in the outer column 46, and is fixed to the lower surface of the upper side inner column 48. In other words, the upper side telescopic actuator 14 rotationally drives the upper side telescopic motor 53 to displace the upper side nut 56 in the axial direction of the upper side screw shaft 55, thereby causing the upper side inner column 48 displace in the forward-backward direction relative to the outer column 46.

### <Tilt Actuator>

The tilt actuator 15 is arranged so as to bridge between the displacement side support frame 43 of the displacement bracket 38 and the outer column 46, and displaces the outer column 46 in the up-down direction relative to the displacement bracket 38. Further, the reaction force generating device 10 connected to the front side of the position adjustment device 9 is supported by a pair of pivot bolts 58 arranged in the width direction with respect to the fixing side support frame 40 so as to be able to rotate freely. As a result, the column body 36 becomes capable of swinging in the up-down direction around the pivot bolts 58 with respect to the bracket 35.

The tilt actuator 15 includes a tilt motor 59 and a tilt feed screw device 60.

The tilt motor 59 is fixed to one of the support walls 45 of the displacement side support frame 43 with its motor output shaft (not illustrated) oriented in the forward-backward direction.

The tilt feed screw device 60 includes a tilt screw shaft and a tilt nut (not illustrated). The tilt screw shaft is arranged with its axial direction oriented in the up - down direction, and is rotationally driven by the tilt motor 59 through a speed-reducing mechanism such as a worm reducer (not illustrated). The tilt screw shaft is supported so as to be able to only rotate with respect to the one of the support walls 45. The tilt nut is screwed onto the tilt screw shaft, and is pivotally supported on a side surface in the width direction of the outer column 46.

In other words, the tilt actuator 15 rotationally drives the tilt motor 59 to displace the tilt nut in the axial direction of the tilt screw shaft, thereby causing the outer column 46 displace in the up-down direction relative to the displacement bracket 38.

### <<Method for Adjusting the Position of the Steering Wheel>>

In order to adjust the front/rear position of the steering wheel 2 by the position adjustment device 9 of this example, the lower side telescopic actuator 13 and/or the upper side telescopic actuator 14 are driven. When the lower side telescopic actuator 13 is driven, the displacement bracket 38 displces in the forward-backward direction relative to the fixed bracket 37, and the outer column 46 displces in the forward-backward direction relative to the lower side inner column 47. When the upper side telescopic actuator 14 is driven, the upper side inner column 48 displces in the forward-backward direction relative to the outer column 46.

As a result, the entire length of the steering column 12 and the entire length of the steering shaft 11 are extended or contracted, thereby adjusting the front/rear position of the steering wheel 2. After the front/rear position of the steering wheel 2 has been adjusted to a desired position, the driving of the lower side telescopic actuator 13 and/or the upper side telescopic actuator 14 is stopped.

In order to adjust the up/down position of the steering wheel 2 by the position adjustment device 9 of this example, the tilt actuator 15 is driven so as to displace the rear side portion of the outer column 46 in the up-down direction relative to the displacement bracket 38. As a result, the steering shaft 11 that is supported inside the column body 36 so as to be able to rotate freely swings and the up/down position of the steering wheel 2 is adjusted. After the up/down position of the steering wheel 2 has been adjusted to a desired position, the driving of the tilt actuator 15 is stopped.

The adjustment of the front/rear position of the steering wheel 2 and the adjustment of the up/down position can be performed simultaneously or independently (at different times).

During automatic driving, in order to significantly move the steering wheel 2 away from the driver forward, storing the steering wheel 2 in a dashboard by the position adjustment device 9 of this example, the lower side telescopic actuator 13 and the upper side telescopic actuator 14 are driven respectively. As a result, the displacement bracket 38 is displced forward relative to the fixed bracket 37, the outer column 46 is displaced forward relative to the lower side inner column 47, and the upper side inner column 48 is displaced forward relative to the outer column 46.

By shortening the entire length of the steering column 12 and shortening the entire length of the steering shaft 11 to the state illustrated in Fig. 9(D), the steering wheel 2 is moved significantly forward. After the steering wheel 2 is moved significantly forward, the driving of the lower side telescopic actuator 13 and the upper side telescopic actuator 14 are stopped respectively.

### <Reaction Force Generating Device>

The reaction force generating device 10 is arranged in front of the position adjustment device 9, and is fixed to the position adjustment device 9. The reaction force generating device 10 is controlled by the control device 6 and applies to the steering wheel 2 a steering reaction force of a magnitude and direction according to driving conditions such as the steering angle of the steering wheel 2 and the vehicle speed.

The reaction force generating device 10 includes a gear housing 61, a reaction force applying motor 62, a worm reducer (not illustrated), and an output shaft 63.

The gear housing 61 is fixed to an end portion on the front side of the lower side inner column 47 of the position adjustment device 9. The output shaft 63 is supported inside the gear housing 61 so as to be able to rotate freely.

The reaction force applying motor 62 is supported and fixed to the gear housing 61. The rotation of the reaction force applying motor 62 is transmitted to the steering shaft 11 through the worm reducer and the output shaft 63.

The worm reducer includes a worm wheel externally fitted and fixed onto the output shaft 63 and a worm fixed to a tip end portion of the motor output shaft of the reaction force applying motor 62.

The output shaft 63 is arranged with its axial direction oriented in the forward-backward direction, and is supported inside the gear housing 61 so as to be able to rotate freely. The output shaft 63 has a configuration in which a lower side output shaft and an upper side output shaft that are arranged coaxially with each other are connected to each other through a torsion bar. A torque sensor for measuring the steering torque input to the steering wheel 2 by the driver is arranged around the upper side output shaft. An end portion on the rear side of the upper side output shaft is connected to an end portion on the front side of the inner shaft 17 of the steering shaft 11 through a torque transmission joint.

In order to apply a steering reaction force to the steering wheel 2 by the reaction force generating device 10, the reaction force applying motor 62 is driven by the control device 6 based on various signals indicating the driving conditions, for example, steering torque, steering angle, vehicle speed, and the like. The rotation of the reaction force applying motor 62 is transmitted to the output shaft 63 through the worm reducer, and is applied to the steering wheel 2 as a steering reaction force through the steering shaft 11.

With the steering shaft 11 of the steering device 1 of this example as described above, it is possible to suppress the sliding resistance from changing due to the change in the engagement length between the inner shaft 17 and the outer shaft 18 when the entire length of the steering shaft 11 is changed, even in a structure especially in which the steering shaft 11 has a long stroke.

In this example, the inner diameter side engaging portion 19 of the inner shaft 17 includes the first engaging portions 22a, 22b having the effective length X and the non-engaging portion 23 having the dimension in the axial direction L₂₃ that is the same as the effective length X. The inner diameter side engaging portion 19 is configured so that two of the first engaging portion 22a, 22b are arranged on both sides of the non-engaging portion 23. Further, the effective length Y of the second engaging portion 32 of the outer diameter side engaging portion 31 provided on the outer shaft 18 is set to twice the effective length X (2X), which is equal to the sum of the effective length X and the dimension in the axial direction L₂₃ of the non-engaging portion 23.

Due to this, when the entire length of the steering shaft 11 is changed, as illustrated in Fig. 9(A) to Fig. 9(D), the engagement length E between the plurality of external teeth 25 and the plurality of inner teeth 33 remains at X and does not change. Therefore, even when the entire length of the steering shaft 11 is changed, the magnitude of the sliding resistance of the steering shaft 11 can be made constant without changing. As a result, even though the steering shaft 11 of this example has a long stroke, changes in the drive noise are suppressed even when the lower side telescopic actuator 13 and the upper side telescopic actuator 14 are driven to change the entire length, so that it is prevented to give discomfort to the driver and passengers.

Further, even when the effective length of the plurality of external teeth 25 is set to X and the effective length of the plurality of inner teeth 33 is set to 2X, the extension/contraction stroke amount of the steering shaft 11 may be ensured to be 3X. Due to this, the dimension in the axial direction of each of the plurality of external teeth 25 and the plurality of inner teeth 33 does not need to be excessively large. Accordingly, bending during manufacturing of the inner shaft 17 and the outer shaft 18 can be suppressed, so that the productivity of the steering shaft 11 can be ensured.

In this example, the inner shaft 17 is configured that the inner diameter side engaging portion 19 is provided with the resin coating layer 27 by covering the end portion on the one side in the axial direction of the shaft body 69 with the resin coating layer 27. However, in a case of implementing the present disclosure, the resin coating layer may be omitted.

### [Second Example]

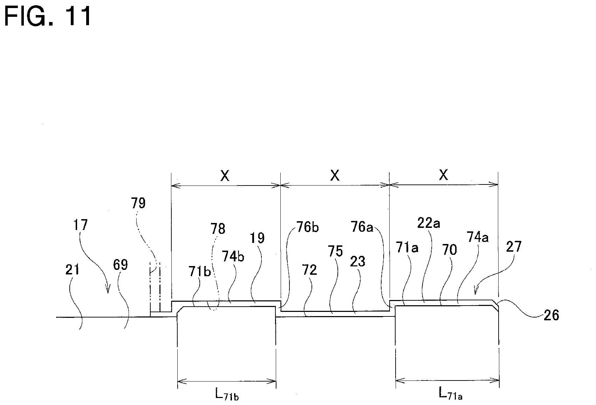

A second example of an embodiment of the present disclosure will be described using Fig. 11.

In this example, the dimension in the axial direction L₇₁ₐ of the first engaging core portion 71a on the one side in the axial direction and the dimension in the axial direction L_{71b} of the first engaging core portion 71b on the other side in the axial direction of the inner diameter side engaging core portion 70 provided on the shaft body 69 are approximately the same.

The resin coating layer 27 covers the range from the end portion on the one side in the axial direction of the first engaging core portion 71a on the one side in the axial direction to the end portion on the one side in the axial direction of the intermediate shaft portion 21. In other words, the first engaging core portion 71b on the other side in the axial direction is covered by the first engaging core portion cover portion 74b over the entire length in the axial direction.

In this example, when forming the resin coating layer 27, first, the shaft body 69 is set in a mold 77. The cavity 78 of the mold 77 has an inner surface shape that corresponds to the outer surface shape of the resin coating layer 27 to be formed, that is, the inner surface shape that is inverted with respect to the outer surface shape of the resin coating layer 27. Next, molten synthetic resin is injected into the cavity 78 from a gate 79 arranged on the outside in the radial direction of the end portion on the one side in the axial direction of the intermediate shaft portion 21, and the molten synthetic resin is cooled and solidified to form the resin coating layer 27.

With this example, after synthetic resin is injection molded around the shaft body 69, it is not necessary to cut the outer peripheral surface of the portion that will become the non-engaging portion 23, so that the manufacturing of the steering shaft 11 becomes easier. Compared to the structure of the first example, it is easier to regulate the dimension in the axial direction of the first engaging portion 22b on the other side in the axial direction to the effective length X with high precision.

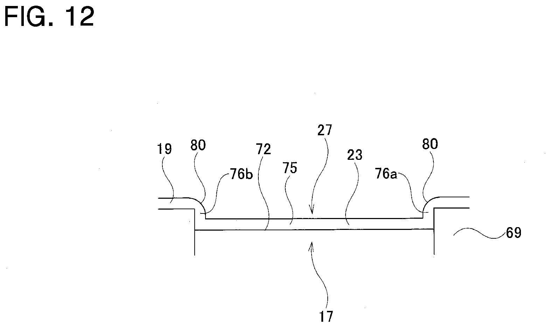

Fig. 12 illustrates a variation of the second example. In this variation, corner R portions 80 having an arc-shaped cross-sectional shape are provided at the connecting portions between the outer peripheral surfaces and the side surfaces in the axial direction of the side plate portions 76a, 76b.

With this variation, the end portions in the axial direction of the outer peripheral surfaces of the side plate portions 76a, 76b are less likely to get caught on the inner peripheral surface of the outer shaft 18, and displacement of the inner shaft 17 in the axial direction relative to the outer shaft 18 can be prevented from being obstructed.

The other configuration, functions, and effects of the second example are the same as in the first example.

### [Third Example]

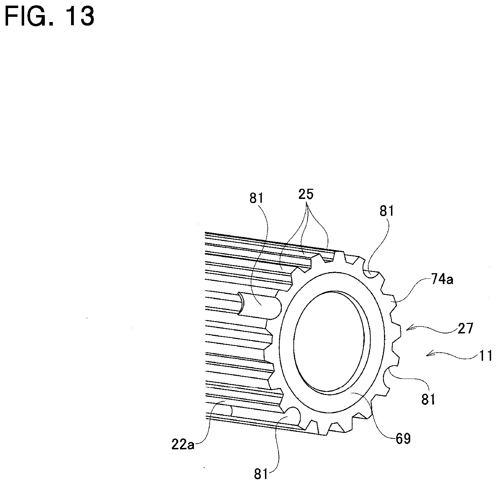

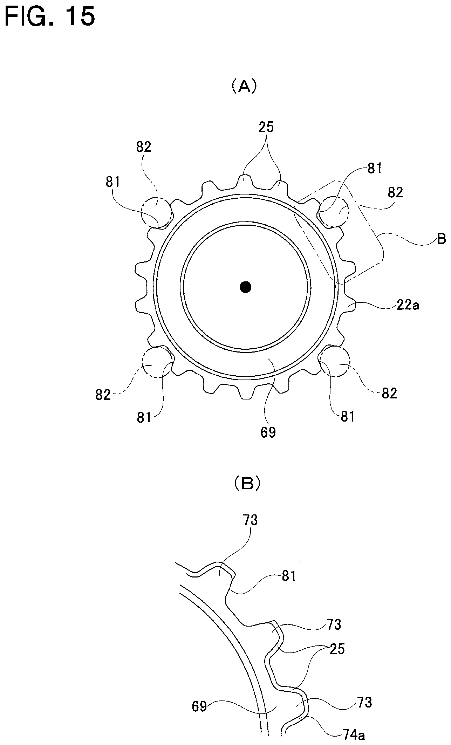

A third example of an embodiment of the present disclosure will be described using Fig. 13 to Fig. 15(B).

In this example, the inner diameter side engaging portion 19 has cutout recessed portions 81 at plural locations in the circumferential direction at an end portion on the one side in the axial direction of the outer peripheral surface. More specifically, the first engaging portion 22a on the one side in the axial direction has cutout recessed portions 81 at four locations in the circumferential direction at the end portion on the one side in the axial direction of the outer peripheral surface. Each of the cutout recessed portions 81 has a semicircular cross-sectional shape and opens to the outer peripheral surface and the end surface on the one side in the axial direction of the first engaging portion 22a on the one side in the axial direction.

In this example, each of the cutout recessed portions 81 is formed in a portion between two external teeth 25 that are adjacent in the circumferential direction. Each of the cutout recessed portions 81 holds grease. As a result, the lubricated state between the inner diameter side engaging portion 19 and the outer diameter side engaging portion 31 can be maintained well for a long period of time, and the resistance when the inner shaft 17 is displaced in the axial direction relative to the outer shaft 18 can be made small.

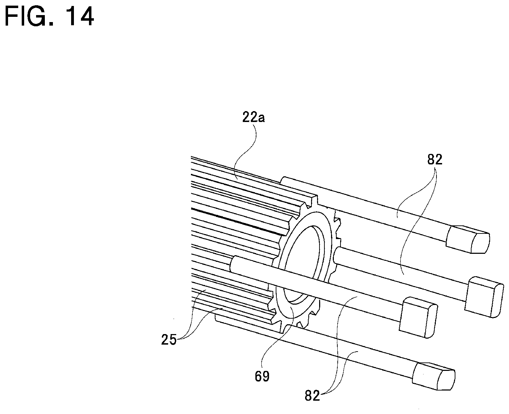

In this example, when forming the resin coating layer 27, in a state where the shaft body 69 is set in the mold, as illustrated in Fig. 14, positioning pins 82 are inserted into several portions between the plurality of tooth cores 73 of the first engaging core portion 71a on the one side in the axial direction so as to determine the position of the shaft body 69 in the circumferential direction with respect to the mold. Next, molten synthetic resin is injected into the mold under pressure. After the synthetic resin is cooled and solidified, the completed inner shaft 17 is removed from the mold. The synthetic resin around the first engaging core portion 71a on the one side in the axial direction where the positioning pins 82 are arranged is extremely thin compared to other portions, and the cutout recessed portions 81 are formed in those portions.

In this example, the tooth thickness of some of the plurality of external teeth 25 of the first engaging portions 22a, 22b is smaller than the tooth thickness of the remaining external teeth 25. More specifically, the thickness of the synthetic resin covering some of the plurality of tooth cores 73 is smaller than the thickness of the synthetic resin covering the remaining tooth cores 73.

The external teeth 25 which have a small tooth thickness mesh with the inner teeth 33 of the outer diameter side engaging portion 31 when transmitting torque between the inner shaft 17 and the outer shaft 18, however, when displacing the inner shaft 17 in the axial direction relative to the outer shaft 18, the tooth surfaces of the external teeth 25 do not come into sliding contact with the tooth surfaces of the inner teeth 33. Due to this, the resistance generated when the inner shaft 17 is displaced in the axial direction relative to the outer shaft 18 can be kept small.

In this example, the cutout recessed portions 81 are formed between the external teeth 25 that are adjacent in the circumferential direction and have a small tooth thickness. Due to this, the effect of the presence of the cutout recessed portions 81 on the resistance when the inner shaft 17 is displaced in the axial direction relative to the outer shaft 18 can be made small.

The other configuration, functions, and effects of the third example are the same as in the first example.

### [Fourth Example]

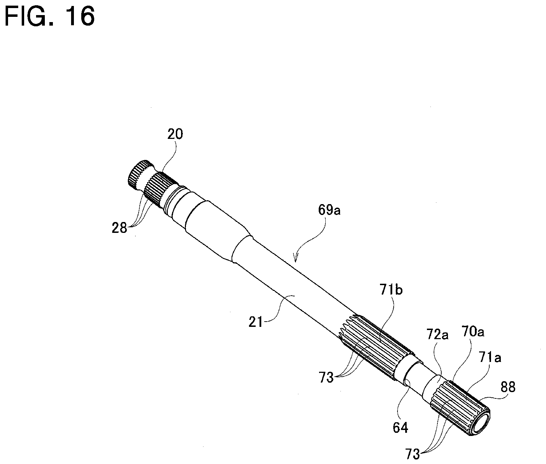

A fourth example of an embodiment of the present disclosure will be described using Fig. 16.

In this example, the configuration of the non-engagement core portion 72a of the inner diameter side engaging core portion 70a of the shaft body 69a of the inner shaft 17 is changed from the configuration of the first example.

In this example, a single annular groove 64 is formed in the intermediate portion in the axial direction of the outer peripheral surface of the non-engagement core portion 72a of the shaft body 69a. By covering the outer peripheral surface of the non-engagement core portion 72a by the resin coating layer 27, the synthetic resin that configures the resin coating layer 27 enters inside the annular groove 64 so as to engage the resin coating layer 27 with the annular groove 64 in the axial direction. In other words, the annular groove 64 configures an anti-slip portion that prevents the resin coating layer 27 from moving in the axial direction relative to the shaft body 69a.

In this example, by forming the annular groove 64 on the outer peripheral surface of the shaft body 69a, it is possible to suppress the resin coating layer 27 from being displaced in the axial direction relative to the inner diameter side engaging core portion 70a. In other words, the retention force of the resin coating layer 27 can be improved. The outer diameter of the portion of the resin coating layer 27 that covers the annular groove 64 can be the same as the outer diameter of the portion of the shaft body 69a that covers the portion outside the annular groove 64, or it can be smaller by twice the depth in the radial direction of the annular groove 64.

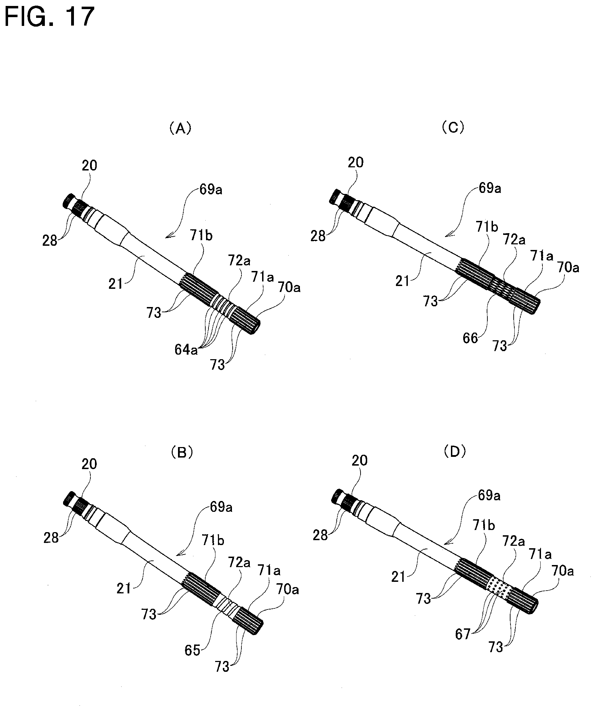

Fig. 17(A) to Fig. 17(D) illustrate four variations of the fourth example.

In the first variation illustrated in Fig. 17(A), a plurality of annular grooves 64a (four in the illustrated example) are formed on the outer peripheral surface of the non-engagement core portion 72a. The plurality of annular grooves 64a are arranged so as to be separated in the axial direction. The synthetic resin that configures the resin coating layer 27 enters inside each of the annular grooves 64a so as to engage the resin coating layer 27 with the annular grooves 64a in the axial direction. In other words, in the first variation, each of the plurality of annular grooves 64a configures an anti-slip portion. In the first variation, the retention force of the resin coating layer 27 can be improved compared to the fourth example.

In the second variation illustrated in Fig. 17(B), a spiral groove 65 is formed on the outer peripheral surface of the non-engagement core portion 72a. The synthetic resin that configures the resin coating layer 27 enters the spiral groove 65 so as to engage the resin coating layer 27 with the spiral groove 65. In other words, in the second variation, the spiral groove 65 configures an anti-slip portion. With the second variation, the spiral groove 65 can be machined in one chuck, so that the productivity of the inner shaft 17 can be improved.

In the third variation illustrated in Fig. 17(C), a knurled groove 66 is formed on the outer peripheral surface of the non-engagement core portion 72a. The synthetic resin that configures the resin coating layer 27 enters inside the knurled groove 66 so as to engage the resin coating layer 27 with the knurled groove 66. In other words, in the third variation, the knurled groove 66 configures the anti-slip portion. With the third variation, the retention force of the resin coating layer 27 can be increased.

In the fourth variation illustrated in Fig. 17(D), a plurality of recessed portions 67 are formed on the outer peripheral surface of the non-engagement core portion 72a. The plurality of recessed portions 67 are arranged in multiple rows so as to be separated in the axial direction, and each row is arranged at equal intervals in the circumferential direction. The synthetic resin that configures the resin coating layer 27 enters inside each of the recessed portions 67 so as to engage the resin coating layer 27 with the concave portions 67. In the fourth variation, each of the plurality of recessed portions 67 configures an anti-slip portion. With the fourth variation, the retention force of the resin coating layer 27 can be increased.

The other configurations, functions, and effects of the fourth example are the same as in the first example.

### [Fifth Example]

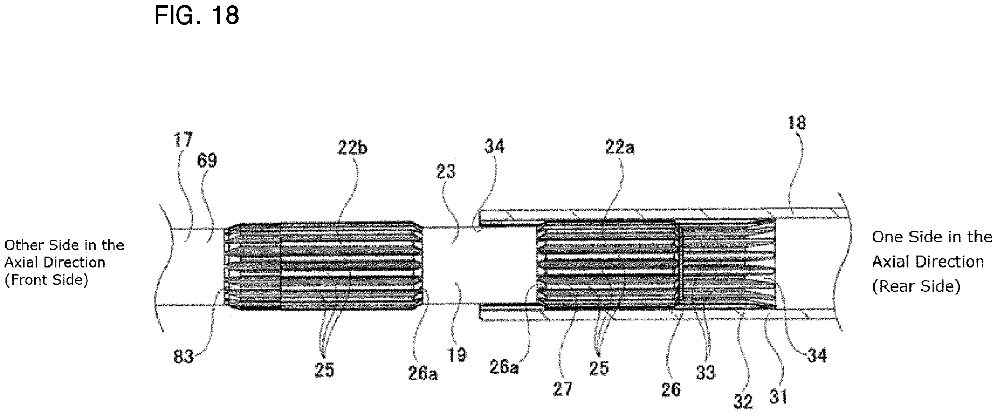

A fifth example of an embodiment of the present disclosure will be described using Fig. 18.

In this example, each of the first engaging portions 22a, 22b of the inner diameter side engaging portion 19 has a chamfered portion 26a at an end portion proximal to the non-engaging portion 23. The chamfer angle of the chamfered portion 26a is preferably 45 degrees or less, and is 30 degrees in the illustrated example.

The second engaging portion 32 has chamfered portions 34 at end portions on both sides in the axial direction. The chamfer angle of the chamfered portions 34 is preferably 45 degrees or less, and is 30 degrees in the illustrated example.

In this example, even if bending deformation occurs in either the inner shaft 17 or the outer shaft 18, the end portions in the axial direction of the first engaging portions 22a, 22b can be prevented from riding over the end portions in the axial direction of the second engaging portion 32.

In other words, since a chamfered portion 34 is provided at the end portion on the one side in the axial direction of the second engaging portion 32 and a chamfered portion 26a is provided at the end portion on the other side in the axial direction of the first engaging portion 22a, the end portion on the other side in the axial direction of the first engaging portion 22a can be prevented from riding over the end portion on the one side in the axial direction of the second engaging portion 32 when moving the outer shaft 18 toward the one side in the axial direction relative to the inner shaft 17.

Further, since the chamfered portion 34 is provided at an end portion on the other side in the axial direction of the second engaging portion 32 and a chamfered portion 26a is provided at an end portion on the one side in the axial direction of the first engaging portion 22b, the end portion on the one side in the axial direction of the first engaging portion 22b can be prevented from riding over the end portion on the other side in the axial direction of the second engaging portion 32 when moving the outer shaft 18 toward the other side in the axial direction relative to the inner shaft 17.

In this example, since a chamfered portion 26a is arranged at the end portion of each of the first engaging portions 22a, 22b that is proximal to the non-engaging portion 23, chamfered portions are arranged on portions of the plurality of tooth cores 73 that are adjacent to both sides in the axial direction of the non-engagement core portion 72. These chamfered portions can be continuous with the anti-slip portion formed on the outer peripheral surface of the non-engagement core portion 72.

In a case of implementing the present disclosure, only the chamfered portions 34 may be formed on end portions on both sides in the axial direction of the second engaging portion 32, and the two chamfered portions 26a arranged respectively on the end portions of the first engaging portions 22a, 22b that are proximal to the non-engaging portion 23 may be omitted.

The other configurations, functions, and effects of the fifth example are the same as in the first example.

### [Sixth Example]

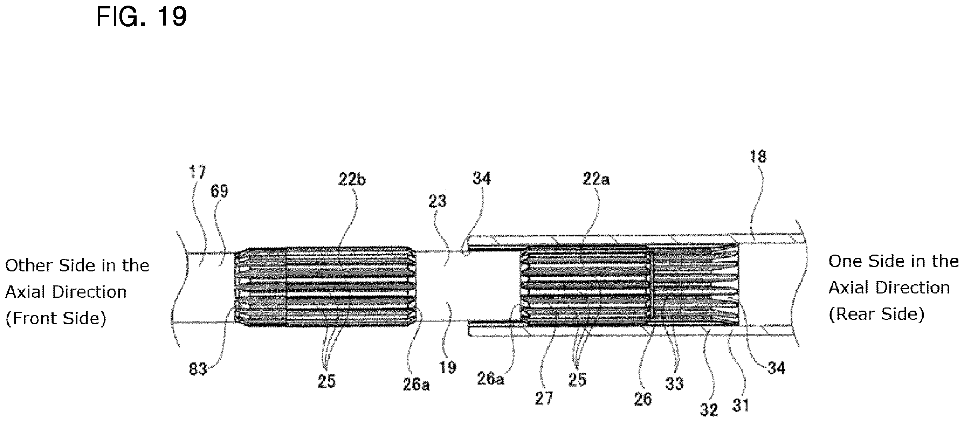

A sixth example of an embodiment of the present disclosure will be described using Fig. 19.

In this example, an outer diameter side engaging portion 31a of an outer shaft 18a corresponds to one of the engaging portions. The outer diameter side engaging portion 31a has a stepped shape and includes a non-engaging portion 68 corresponding to the other engaging portion that does not engage with an inner diameter side engaging portion 19a of an inner shaft 17a at an intermediate portion in the axial direction. First engaging portion 84a, 84b, which correspond to two of engageable portion, are arranged on both sides of the non-engaging portion 68. Each of the first engaging portions 84a, 84b has an effective length X. The non-engaging portion 68 has a dimension in the axial direction that is the same as the effective length X.

In other words, the outer diameter side engaging portion 31a includes one non-engaging portion 68 and two of the first engaging portion 84a, 84b. In the outer diameter side engaging portion 31a, the first engaging portion 84a, the non-engaging portion 68, and the first engaging portion 84b are arranged in this order in the axial direction.

Each of the first engaging portions 84a, 84b is configured by an internal teeth portion 87a having a plurality of inner teeth 33a arranged in the circumferential direction. The plurality of inner teeth 33a extend in the axial direction and are arranged at equal pitches in the circumferential direction. The tooth thickness and tooth height of each of the plurality of inner teeth 33a is constant over the axial direction except for a chamfered portion 34 provided at an end portion in the axial direction.

Of the first engaging portions 84a, 84b, the number of the plurality of inner teeth 33a, pitch, tooth thickness, and tooth height are the same for the first engaging portion 84a arranged on the other side in the axial direction and the first engaging portion 84b arranged on the one side in the axial direction.

The first engaging portions 84a, 84b have the same effective length X. More specifically, of the plurality of inner teeth 33a of each of the first engaging portions 84a, 84b, the dimension in the axial direction of a portion that is deviated from the chamfered portion 34 is the effective length X.

The non-engaging portion 68 is arranged between the first engaging portions 84a, 84b in the axial direction. The non-engaging portion 68 has an inner peripheral surface having a cylindrical surface shape. Further, the non-engaging portion 68 has an inner diameter that is larger than the root circle diameter of the plurality of inner teeth 33a of the first engaging portions 84a, 84b.

The non-engaging portion 68 has a dimension in the axial direction L₆₈ that is the same as the effective length X of the first engaging portions 84a, 84b (L₆₈=effective length X).

On the other hand, the inner diameter side engaging portion 19a of this example has a second engaging portion 85 corresponding to an engageable portion over the entire length in the axial direction. In other words, the inner diameter side engaging portion 19a is configured only by the second engaging portion 85. The second engaging portion 85 is configured by an external teeth portion 86a having a plurality of external teeth 25a arranged on the circumferential direction. The plurality of external teeth 25a extend in the axial direction and are arranged at equal pitches in the circumferential direction. The tooth thickness and tooth height of the plurality of external teeth 25a is constant over the axial direction except for a chamfered portion 26 provided at an end portion in the axial direction. The plurality of external teeth 25a have an addendum circle diameter that is smaller than the inner diameter of the non-engaging portion 68 of the outer shaft 18a.

The inner diameter side engaging portion 19a includes a resin coating layer 27. More specifically, the range over the entire length of the second engaging portion 85 is covered with the resin coating layer 27.

The second engaging portion 85 engages with the first engaging portion 84a, 84b of the outer diameter side engaging portion 31a provided on the outer shaft 18a. More specifically, the plurality of external teeth 25a of the second engaging portion 85 engage with the plurality of inner teeth 33a of the first engaging portion 84a, 84b so as to enable torque transmission and relative displacement in the axial direction. As a result, the outer shaft 18a moves in the forward-backward direction relative to the inner shaft 17a together with the steering wheel 2 so that the steering shaft 11a is extended or contacted.

The second engaging portion 85 does not engage with the non-engaging portion 68 of the outer diameter side engaging portion 31a provided on the outer shaft 18a.

In this example, the effective length Y of the second engaging portion 85, which is a dimension in the axial direction of a portion of the plurality of external teeth 25a that is covered by the resin coating layer 27, is twice the length of the effective length X (2X) of each of the first engaging portions 84a, 84b of the outer diameter side engaging portion 31a. In this example, the value of "Y" is about 100mm. In this example, the dimension in the axial direction L₂₇ of the resin coating layer 27 is aproximately equal to twice the effective length X (2X) of each of the first engaging portions 84a, 84b (L₂₇≈2X).

In a case of the steering shaft 11a of this example as well, the engagement length E between the plurality of external teeth 25a and the plurality of inner teeth 33a can be made constant when the entire length is changed. Due to this, even when the entire length of the steering shaft 11a is changed, the sliding resistance can be made constant. Furthermore, in this example, since the range in which the resin coating layer 27 is formed (the dimension L₂₇ in the axial direction) can be made shorter than in the configuration of the first example, the manufacturing cost of the steering shaft 11a can be reduced.

The other configuration, functions, and effects of the sixth example are the same as in the first example.

Although an embodiment of the present disclosure has been described above, the present disclosure is not limited thereto and may be appropriately changed without departing from the technical spirit of the invention. Further, configurations of the first through the sixth examples of an embodiment of the present disclosure and variations thereof may be appropriately combined and implemented as long as no contradiction occurs.

The present disclosure can be applied not only to an electric steering device in which the front-forward position of the steering wheel is adjusted electrically, but can also be applied to a manual steering device in which the front/rear position of the steering wheel is adjusted manually. Further, the present disclosure can be applied not only to a steer-by-wire (linkless structure) steering devices, but can also be applied to other types of steering devices.

### Reference Signs List

1 Steering device
2 Steering wheel
3 Steering unit
4 Steered wheels
5 Wheel turning unit
6 Control device
7 Actuator for turning wheels
8 Tie rod
9 Position adjustment device
10 Reaction force generating device
11, 11a Steering shaft
12 Steering column
13 Lower side telescopic actuator
14 Upper side telescopic actuator
15 Tilt actuator
16 Rolling bearing
17, 17a Inner shaft
18, 18a Outer shaft
19, 19a Inner diameter side engaging portion
20 Connecting portion
21 Intermediate shaft portion
22a, 22b First engaging portion
23 Non-engaging portion
25, 25a External teeth
26, 26a Chamfered portion
27 Resin coating layer
28 Male serration teeth
29 Large diameter cylindrical portion
30 Small diameter cylindrical portion
31, 31a Outer diameter side engaging portion
32 Second engaging portion
33, 33a Inner teeth
34 Chamfered portion
35 Bracket
36 Column body
37 Fixed bracket
38 Displacement bracket
39 Fixing plate portion
40 Fixing side support frame
41 Mounting bolt
42 Displacement plate portion
43 Displacement side support frame
44 Linear guide
45 Support wall
46 Outer column
47 Lower side inner column
48 Upper side inner column
49 Lower side telescopic motor
50 Lower side feed screw device
51 Lower side screw shaft
52 Lower side nut
53 Upper side telescopic motor
54 Upper side feed screw device
55 Upper side screw shaft
56 Upper side nut
57 Connector member
58 Pivot bolts
59 Tilt motor
60 Tilt feed screw device
61 Gear housing
62 Reaction force applying motor
63 Output shaft
64, 64a Annular groove
65 Spiral groove
66 Knurled groove
67 Recessed portion
68 Non-engaging portion
69, 69a Shaft body
70a Inner diameter side engaging core portion
71a, 71b First engaging core portions
72, 72a Non-engagement core portion
73 Tooth core
74a, 74b First engaging core portion cover portion
75 Non-engagement core portion cover portion
76a, 76b Side plate portion
77 Mold
78 Cavity
79 Gate
80 Corner R portion
81 Cutout recessed portion
82 Positioning pin
83 Chamfered portion
84a, 84b First engaging portion
85 Second engaging portion
86, 86a External teeth portion
87, 87a Internal teeth portion
88 External tooth core portion
89 Inner tooth core portion
100 Steering shaft
101, 101a Inner shaft
102, 102a Outer shaft
103 Male spline teeth
104 Resin coating layer
105 Female spline teeth
106, 106a Male spline portion
107, 107a Female spline portion

## Claims

1. A steering shaft, including:
an inner shaft having an inner diameter side engaging portion at an end portion on one side in an axial direction of an outer peripheral surface thereof,
an outer shaft having an outer diameter side engaging portion at an end portion on the other side in the axial direction of an outer peripheral surface thereof, the outer diameter side engaging portion engaging with the inner diameter side engaging portion so as to enable torque transmission and relative displacement in the axial direction, and
either one engaging portion of the inner diameter side engaging portion or the outer diameter side engaging portion has at least one non-engaging portion at an intermediate portion in the axial direction that does not engage with other engaging portion of the inner diameter side engaging portion or the outer diameter side engaging portion,
each of engageable portions arranged on both sides in the axial direction of the non-engaging portion of the one engaging portion has an effective length X, and the non-engaging portion has a dimension in the axial direction that is the same length as the effective length X, and
the other engaging portion has an effective length Y that is twice as long as the effective length X.

2. The steering shaft according to claim 1, wherein
the inner diameter side engaging portion is configured by the one engaging portion and the outer diameter side engaging portion is configured by the other engaging portion,
the engageable portions of the inner diameter side engaging portion are configured by external teeth portions comprising a plurality of external teeth, and the outer diameter side engaging portion is configured by an internal teeth portion comprising a plurality of inner teeth, and
the effective length X is a dimension in the axial direction of a portion of the plurality of external teeth that engages with the plurality of inner teeth.

3. The steering shaft according to claim 2, wherein the non-engaging portion is configured by a cylindrical surface having an outer diameter equal to or smaller than a root circle diameter of the plurality of external teeth.

4. The steering shaft according to claim 2 or 3, wherein
the inner shaft has a shaft body and the inner diameter side engaging portion on the outer peripheral surface thereof, and is provided with a resin coating layer that covers the outer peripheral surface of an end portion on the one side in the axial direction of the shaft body.

5. The steering shaft according to claim 4, wherein the inner diameter side engaging portion has an anti-slip portion that prevents the resin coating layer from moving in the axial direction relative to the shaft body.

6. The steering shaft according to claim 1, wherein
the outer diameter side engaging portion is configured by the one engaging portion and the inner diameter side engaging portion is configured by the other engaging portion,
the engageable portion of the outer diameter side engaging portion is configured by an internal teeth portion comprising a plurality of inner teeth and the inner diameter side engaging portion is configured by an external teeth portion comprising a plurality of external teeth, and
the effective length X is a dimension in the axial direction of a portion of the plurality of inner teeth that engage with the plurality of external teeth.

7. The steering shaft according to claim 2 or 6, wherein the external teeth portion of the inner diameter side engaging portion is configured by a male spline portion, and the plurality of external teeth is configured by male spline teeth.

8. The steering shaft according to claim 1, wherein the number of the non-engaging portion is one, and the effective length X is 30mm or more.
